# EUROPEAN PATENT APPLICATION

(11) **EP 4 752 700 A1**
(43) Date of publication of application: **03.06.2026**
(21) Application number: 24861713.6
(22) Date of filing: 24.07.2024
(51) Int. Cl.: G06F 3/04845

(54) **METHOD FOR DRAGGING AND DROPPING PICTURE, AND RELATED APPARATUS**

(30) Priority: 06.09.2023 CN 202311150709
(71) Applicant: Honor Device Co., Ltd., Shenzhen, Guangdong 518040 (CN)
(72) Inventor: GENG, Fei, Shenzhen, Guangdong 518040 (CN); ZHANG, Zeng, Shenzhen, Guangdong 518040 (CN)
(74) Representative: Henselmann, Alexander Gerhard
(86) International application number: PCT/CN2024/107357
(87) International publication number: WO 2025/050868

(57) **Abstract**

Embodiments of this application provide a picture dragging method and a related apparatus, which are applied to the field of terminal technologies. In the method, when a user touches and holds a target control, if an electronic device determines that a format of a drawable object of the target control is not a first format, the electronic device redraws the drawable object of the target control to obtain a drawn picture, where content of the drawn picture includes picture content of the target control, so as to copy and store the picture content of the target control, thereby reducing a quantity of operations of copying the content of the target control. In addition, the electronic device may further create a drag box and display the drawn picture in the drag box, so as to prompt, by displaying the drag box, the user that the picture content of the target control has been copied and stored, so that the user can perform dragging. The drag box may move along with a first touch operation. The electronic device may further start a second application in a movement process, so as to reduce a quantity of operations of enabling a service for receiving the picture content of the target control, thereby improving user experience of using the electronic device.

## Description

This application claims priority to Chinese Patent Application No. 202311150709.5, filed with the China National Intellectual Property Administration on September 6, 2023 and entitled "PICTURE DRAWING METHOD AND RELATED APPARATUS", which is incorporated herein by reference in its entirety.

### TECHNICAL FIELD

This application relates to the field of terminal technologies, and in particular, to a picture drawing method and a related apparatus.

### BACKGROUND

With development of terminal technologies, an electronic device provides functions of copying and pasting content in an application. In a possible implementation, a user may forward content in an application on the electronic device to another application, so as to implement content transfer and processing between different applications.

However, an operation of transferring content between different applications is relatively cumbersome, which may degrade user experience of using the electronic device.

### SUMMARY

An embodiment of this application provides a picture dragging method, which is applied to the field of terminal technologies. When a user touches and holds a target control, if an electronic device determines that a format of a drawable object of the target control is not a first format, the electronic device redraws the drawable object of the target control to obtain a drawn picture, where content of the drawn picture includes picture content of the target control, so as to copy and store the picture content of the target control, thereby reducing a quantity of operations of copying the picture content of the target control. In addition, the electronic device may further create a drag box and display the drawn picture in the drag box, so as to prompt, by displaying the drag box, the user that the picture content of the target control has been copied and stored, so that the user can perform dragging. The drag box may move along with a first touch operation. The electronic device may further start a second application in a movement process, so as to reduce a quantity of operations of enabling a service for receiving the picture content of the target control, thereby improving user experience of using the electronic device.

According to a first aspect, an embodiment of this application provides a picture dragging method. The method includes:
An electronic device displays a first interface of a first application, where the first interface includes a first view, and the first view includes a first picture. The electronic device receives a first touch operation performed on the first picture. When the first touch operation remains touched and held, and when the electronic device determines that a format of a drawable object of the first picture is not a first format, the electronic device obtains the drawable object of the first picture, redraws the drawable object of the first picture to obtain a second picture, and creates a drag box. Content of the second picture includes content of the first picture. The second picture is displayed in the drag box. When the first touch operation moves, the drag box moves along with the first touch operation. In response to that the first touch operation moves to a first region of a display screen of the electronic device, the electronic device starts a second application, and displays a window of the second application in a second region of the display screen. The window of the second application includes one or more icons, and each of the icons corresponds to one service capable of receiving the picture displayed in the drag box. The first format is, for example, a bitmap format.

In this way, when the first touch operation remains touched and held, if the electronic device determines that the format of the drawable object of the first picture is not the first format, the electronic device obtains the drawable object of the first picture, redraws the drawable object of the first picture to obtain a second picture, and creates a drag box, where the content of the second picture is the same as the content of the first picture. The electronic device may display the drag box, and the drag box displays the second picture, so as to prompt the user that the content of the first picture has been copied and stored, so that the user can perform dragging, thereby reducing a quantity of operations of copying the content of the first picture. The drag box may move along with the first touch operation. The electronic device further starts the second application during movement of the first touch operation. The window of the second application includes one or more icons so that the user can easily select a target service, where the target service is a service corresponding to a target icon. This may improve user experience of using the electronic device.

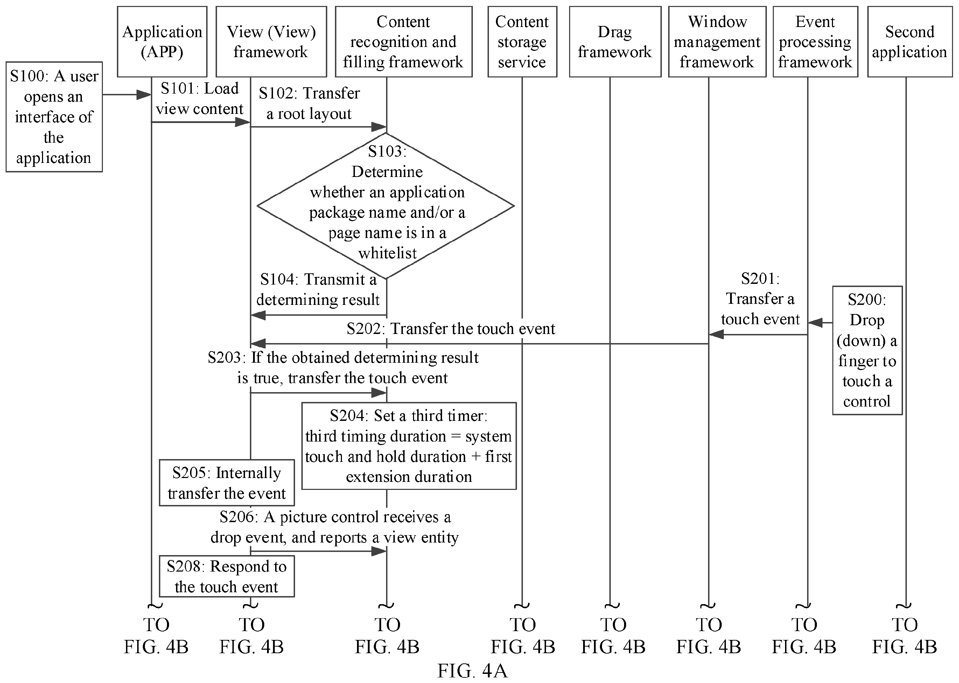

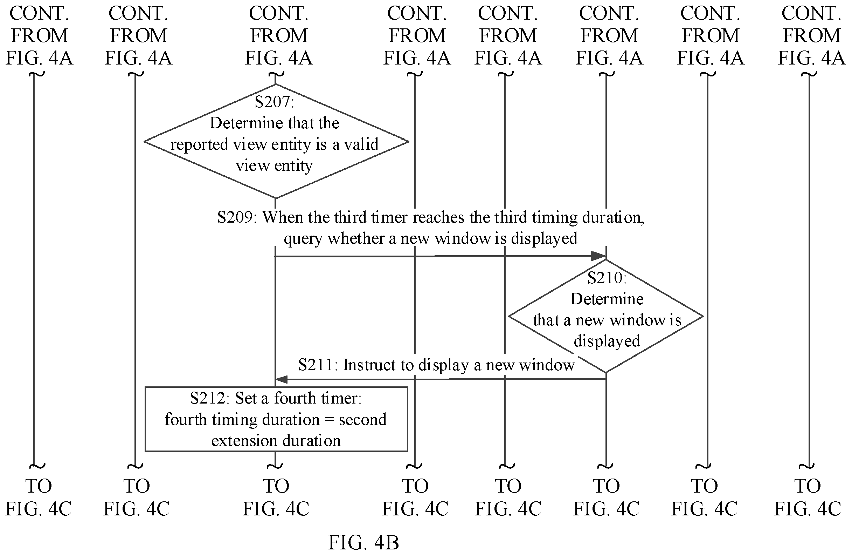

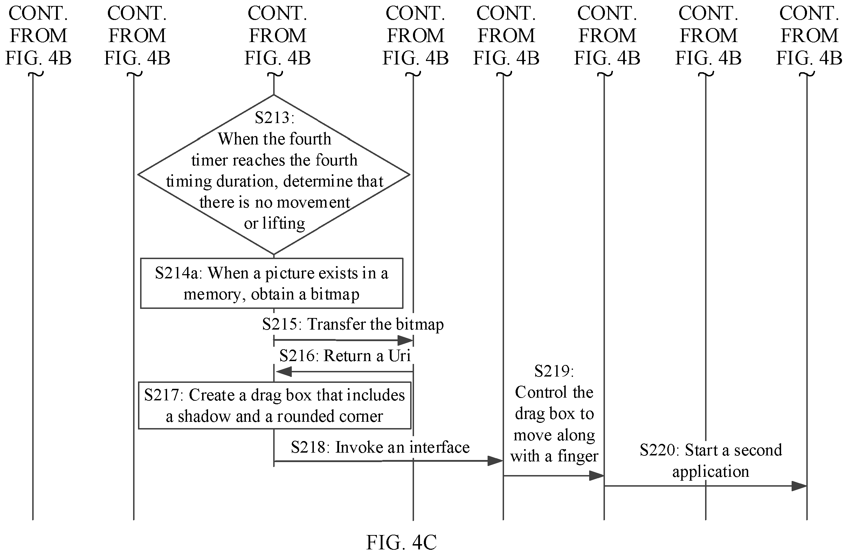

In a possible implementation, before the electronic device obtains the drawable object of the first picture, the method further includes: The electronic device determines whether a format of the first view is a second format. When the electronic device determines that the format of the first view is the second format, the electronic device determines whether the format of the drawable object of the first picture is the first format. Alternatively, when the electronic device determines that the format of the first view is not the second format, the electronic device obtains a display region resource of the first view, redraws the display region resource of the first view to obtain a third picture, and creates the drag box. The third picture may be displayed in the drag box. The display region resource of the first view includes the drawable object of the first picture and a blank region, and content of the third picture includes the content of the first picture. For example, the second format is an inherited ImageView format in the embodiment of FIG. 4A to FIG. 4C.

In this way, when the format of the first view is not the second format, the electronic device obtains the display region resource of the first view. The third picture obtained by the electronic device by redrawing the display region resource of the first view may include not only the content of the first picture, but also a blank region, so as to copy and store the content of the first picture when the user performs a touch and hold operation, thereby reducing a quantity of operations of copying the content of the first picture. The created drag box may further display the third picture. Displaying the drag box may prompt the user that the content of the first picture has been copied and stored, so that the user can perform dragging.

In a possible implementation, the method further includes: When the electronic device determines that the format of the drawable object of the first picture is the first format, the electronic device obtains the first picture and creates a drag box. The first picture may be displayed in the drag box.

In this way, when the format of the first view is the second format, and the format of the drawable object of the first picture is the first format, the electronic device obtains the drawable object of the first picture, that is, obtains a bitmap corresponding to the first picture, and creates the drag box, so that the drag box displays the first picture. When the user performs a touch and hold operation, the content of the first picture can be copied and stored without a need to redraw an image resource of the first view, thereby reducing a quantity of operations of copying the content of the first picture, and further creating a drag box more quickly in comparison with a need to redraw the drawable object of the first picture, and prompting the user earlier that the content of the first picture has been copied and stored, so that the user can perform dragging.

In a possible implementation, the first format is a bitmap bitmap format. The second format represents that an implementation of a native picture view of Android android is inherited.

In this way, the picture displayed in the drag box may be obtained in different obtaining manners by determining a form of the image resource of the first view. The picture displayed in the drag box may be obtained in different obtaining manners by determining a format of the first view.

In a possible implementation, the method further includes: When the electronic device redraws the drawable object of the first picture to obtain the second picture, the electronic device starts a first timer, where timing duration of the first timer is first duration. When the first timer reaches the first duration, the electronic device deletes the stored second picture.

This may help provide sufficient storage space for next storage of the picture content, and may further reduce an occurrence probability that the picture stored in the electronic device is maliciously spread.

It may be understood that if the electronic device stores the first picture, when the first timer reaches the first duration, the electronic device deletes the stored first picture. If the electronic device stores the third picture, when the first timer reaches the first duration, the electronic device deletes the stored third picture.

In a possible implementation, the method further includes: When the first touch operation moves to a position of a target icon in the one or more icons, in response to lifting of the first touch operation, the second application transfers, to a service corresponding to the target icon, a universal resource identifier Uri of the picture displayed in the drag box. The service corresponding to the target icon obtains, based on the Uri, the picture displayed in the drag box.

In this way, the first touch operation moves to the position of the target icon in the one or more icons, and in response to lifting of the first touch operation, the second application transfers the Uri to the service corresponding to the target icon. The service corresponding to the target icon obtains the content of the first picture based on the Uri, so as to conveniently and quickly transfer the content of the first picture between the first application and the target service, thereby reducing an operation step of enabling a target service by the user, and improving user experience.

In a possible implementation, the method further includes: When the first touch operation moves to a third region of the display screen, and the drag box moves to the third region with the first touch operation, in response to lifting of the first touch operation, the electronic device controls the drag box to roll back to a position at which the drag starts, and the electronic device deletes the stored picture displayed in the drag box. The third region does not include the second region.

In this way, in a scenario in which the first touch operation lifts before moving to the second region, in response to lifting of the first touch operation, the electronic device controls the drag box to roll back to a position at which the drag starts, thereby implementing view experience of cancelling the drag, which may improve user experience. The electronic device deletes the stored picture included in the drag box, helping provide sufficient storage space for next storage of the picture content, and further reducing an occurrence probability that the picture stored in the electronic device is maliciously spread.

In a possible implementation, the second region is a sidebar on a right side of a display screen.

In this way, display space for easy viewing and searching by the user is left for the window of the first application, and it is also convenient for the user to drag the drag box and select a target icon, thereby improving user experience.

In a possible implementation, before the electronic device obtains the drawable object of the first picture, the method further includes: In response to the first touch operation, the electronic device starts a second timer and a third timer, where timing duration of the second timer is second duration, timing duration of the third timer is third duration, and the third duration is a sum of the second duration and delay duration. When the first touch operation remains touched and held, in response to that the second timer reaches the second duration, the electronic device displays a first pop-up window around the first picture, where the first pop-up window includes one or more controls. When the first touch operation remains touched and held, in response to that the third timer reaches the third duration and the electronic device finds, through query, that the electronic device displays the first pop-up window in response to the first touch operation, the electronic device starts a fourth timer, where timing duration of the fourth timer is fourth duration, and the fourth duration is greater than or equal to the delay duration. That the electronic device obtains the drawable object of the first picture, redraws the drawable object of the first picture to obtain a second picture, and creates a drag box includes: In response to that the fourth timer reaches the fourth duration, the electronic device obtains the drawable object of the first picture, redraws the drawable object of the first picture to obtain the second picture, and creates the drag box and displays the drag box.

In this way, the third duration may be used to determine whether a user intention corresponding to the first touch operation is a drag intention. When the first touch operation remains touched and held, if the third timer reaches the third duration, and the electronic device displays a pop-up window, the user intention corresponding to the first touch operation may be an intention of performing an operation on the pop-up window, or may be a drag intention. In this case, it may be further accurately determined, by using the fourth timer and the fourth duration, whether the user intention corresponding to the first touch operation is the drag intention. If the first touch operation does not move or lift when the fourth timer reaches the fourth duration, it may be determined that the user intention corresponding to the first touch operation is the drag intention. In this case, the electronic device may display a drag box, so as to prompt, when the first touch operation does not lift or move, the user that the content of the first picture has been copied and may be dragged, thereby reducing a quantity of operations of copying the content of the first picture, and further improving user experience of using the electronic device. The third duration is a sum of the second duration and the delay duration, and may further implement compatibility between display logic of the drag box and display logic of the pop-up window.

In a possible implementation, the method further includes: The electronic device displays a second interface of a third application, where the second interface includes a second view, and the second view includes a fourth picture. In response to a second touch operation performed on the fourth picture, the electronic device starts the second timer and the third timer. When the second touch operation remains touched and held, in response to that the second timer reaches the second duration, the electronic device displays a second pop-up window around the fourth picture, where the second pop-up window includes one or more controls. When the third timer does not reach the third duration, in response to movement or lifting of the second touch operation, the electronic device disables the third timer.

In this way, the third timer does not reach the third duration, and the second touch operation moves or the second touch operation lifts, which may represent that the user intention corresponding to the second touch operation is not a drag intention. When it is determined that the user intention is not a drag intention, the electronic device disables the third timer, so as to terminate a subsequent drag procedure, thereby reducing power consumption of invalid dragging.

In a possible implementation, the method further includes: The electronic device displays a third interface of a fourth application, where the third interface includes a third view, and the third view includes a fifth picture. In response to a third touch operation performed on the fifth picture, the electronic device starts the second timer and the third timer. When the third touch operation remains touched and held, in response to that the second timer reaches the second duration, the electronic device displays a third pop-up window around the fifth picture, where the third pop-up window includes one or more controls. When the third touch operation remains touched and held, in response to that the third timer reaches the third duration and the electronic device finds, through query, that the electronic device displays the third pop-up window in response to the third touch operation, the electronic device starts a fourth timer, where timing duration of the fourth timer is fourth duration, and the fourth duration is greater than or equal to the delay duration. When the fourth timer does not reach the fourth duration, in response to movement or lifting of the third touch operation, the electronic device disables the fourth timer.

In this way, the fourth timer does not reach the fourth duration, and the third touch operation moves or the third touch operation lifts, which may represent that the user intention corresponding to the third touch operation is not a drag intention. When it is determined that the user intention is not a drag intention, the electronic device disables the fourth timer, so as to terminate a subsequent drag procedure, thereby reducing power consumption of invalid dragging.

According to a second aspect, an embodiment of this application provides an electronic device. The electronic device includes a processor and a storage. The storage stores computer-executable instructions. The processor executes the computer-executable instructions stored in the storage, to enable the electronic device to perform the method according to the first aspect.

According to a third aspect, an embodiment of this application provides a computer-readable storage medium, and the computer-readable storage medium stores a computer program. When the computer program is executed by a processor, the method according to the first aspect is implemented.

According to a fourth aspect, an embodiment of this application provides a computer program product, and the computer program product includes a computer program. When the computer program is run, a computer is enabled to perform the method according to the first aspect.

According to a fifth aspect, an embodiment of this application provides a chip. The chip includes a processor, and the processor is configured to invoke a computer program in a storage to perform the method according to the first aspect.

It should be understood that the technical solutions of the second aspect to the fifth aspect of this application correspond to the technical solutions of the first aspect of this application, and beneficial effects achieved by the aspects and corresponding feasible implementations are similar. Details are not described herein again.

### BRIEF DESCRIPTION OF DRAWINGS

FIG. 1 is a schematic diagram of a structure of an electronic device 100 according to an embodiment of this application;
FIG. 2 is a block diagram of a software structure of an electronic device 100 according to an embodiment of this application.
FIG. 3A to FIG. 3H are diagrams of a picture dragging scenario according to an embodiment of this application;
FIG. 4A to FIG. 4C are flowcharts of module interaction according to an embodiment of this application;
FIG. 5 is a flowchart of module interaction in a finger movement scenario before a third timer expires according to an embodiment of this application;
FIG. 6 is a flowchart of module interaction in a finger lifting scenario before a third timer expires according to an embodiment of this application;
FIG. 7 is a scenario diagram of displaying a new window around a target control according to an embodiment of this application;
FIG. 8 is a schematic flowchart of obtaining a bitmap according to an embodiment of this application;
FIG. 9 is a flowchart of module interaction in a finger movement scenario after an interface of a drag framework is invoked according to an embodiment of this application;
FIG. 10 is a flowchart of module interaction in a finger lifting scenario after an interface of a drag framework is invoked according to an embodiment of this application;
FIG. 11 is another flowchart of module interaction in a finger lifting scenario after an interface of a drag framework is invoked according to an embodiment of this application;
FIG. 12A to FIG. 12C are other flowcharts of module interaction according to an embodiment of this application;
FIG. 13 is a schematic diagram of a display interface according to an embodiment of this application;
FIG. 14A and FIG. 14B are scenario diagrams of finger lifting after an interface of a drag framework is invoked according to an embodiment of this application; and
FIG. 15 is a schematic flowchart of saving a whitelist according to an embodiment of this application.

### DESCRIPTION OF EMBODIMENTS

To clearly describe technical solutions in embodiments of this application, the following briefly describes some terms and technologies in the embodiments of this application.

### 1. Electronic device

The electronic device in the embodiments of this application may include a handheld device with an image processing function, an onboard device, or the like. For example, some electronic devices are a mobile phone (mobile phone), a tablet computer, a palmtop computer, a notebook computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an onboard device, a wearable device, a terminal device in a 5G network, a terminal device in a future evolved public land mobile network (public land mobile network, PLMN), and the like. This is not limited in the embodiments of this application.

As an example rather than a limitation, in the embodiments of this application, the electronic device may alternatively be a wearable device. The wearable device may also be referred to as a wearable smart device, and is a generic term for wearable devices such as hearing aid, glasses, gloves, watches, clothing, and shoes that are intelligently designed and developed from daily wear by using wearable technologies. The wearable device is a portable device that is worn directly on a body or integrated into clothing or an accessory of a user. The wearable device is not only a hardware device, but implements powerful functions through software support, data interaction, and cloud interaction. In a broad sense, the wearable smart device includes a full-featured and large-size device that can implement all or some of functions without relying on a smartphone, for example, a smartwatch or smart glasses, and a device that focuses only on a specific type of application function and needs to be used together with another device such as a smartphone, for example, various types of smart bands and smart jewelry that monitor physical signs.

In addition, in the embodiments of this application, the electronic device may alternatively be an electronic device in an internet of things (internet of things, IoT) system. IoT is an important part in future development of information technologies, and a main technical feature thereof is connecting a thing to a network by using a communication technology, to implement an intelligent network of human-machine interconnection and interconnection between things.

The electronic device in the embodiments of this application may also be referred to as user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

In the embodiments of this application, the electronic device or each network device includes a hardware layer, an operating system layer that runs above the hardware layer, and an application layer that runs above the operating system layer. The hardware layer includes hardware such as a central processing unit (central processing unit, CPU), a memory management unit (memory management unit, MMU), and a memory (also referred to as a main memory). The operating system may be any one or more computer operating systems for implementing service processing through a process (process), for example, a Linux operating system, a Unix operating system, an Android operating system, an iOS operating system, or a windows operating system. The application layer includes applications such as Browser, Contacts, word processing software, and instant messaging software.

### 2. Touch event

The touch event is an event generated by the electronic device when a finger touches a display screen of the electronic device. The touch event includes a touch type, a touch position, and a sampling point. The touch type includes drop (down), move (move), and lift (up). The touch position may be coordinates of a contact point between the finger and the display screen. The sampling point may represent a timestamp of the touch operation. The touch event includes a drop event, a move event, or a lift event. If the touch type of the touch event is down, the touch event may be referred to as a drop event. If the touch type of the touch event is move, the touch event may be referred to as a move event. If the touch type of the touch event is up, the touch event may be referred to as a lift event.

It may be understood that the display screen of the electronic device may be a touchscreen.

### 3. Drop event

The drop event is an event generated by the electronic device when a finger touches the display screen of the electronic device for the first time. The drop event includes a touch type down, a touch position, and a sampling point. The sampling point of the drop event may be a time point at which the finger touches the display screen for the first time.

### 4. Move event

The move event is an event generated by the electronic device by collecting a touch position at a fixed sampling frequency after the finger touches the display screen of the electronic device and before the finger leaves the display screen. The move event includes a touch type move, a touch position, and a sampling point. Before the finger leaves the display screen, each time the electronic device collects a touch position at a fixed sampling frequency, one move event is generated and transferred.

It may be understood that after the finger touches the display screen for the first time, when the finger touches and holds the display screen or the finger moves on the display screen, the electronic device continuously generates and transfers a move event at a fixed sampling frequency.

For example, an event processing framework of the electronic device may generate a drop event and a move event in a process in which the finger touches and holds the display screen, and each time one event is generated, the event is transferred to a module that requires the event. When receiving the move event, the module that requires the event may determine, based on a first threshold and a distance between a touch position of the move event and a touch position of the drop event, whether the operation of the finger on the display screen is a touch and hold operation or a move operation. The distance between the touch position of the move event and the touch position of the drop event may be referred to as an offset. For example, if the offset does not exceed the first threshold, the electronic device may determine that the operation of the finger on the display screen is a touch and hold operation. If the offset exceeds the first threshold, the electronic device may determine that the operation of the finger on the display screen is a move operation.

### 5. Lift event

The lift event is an event generated by the electronic device when the finger lifts from the display screen of the electronic device, that is, when the finger leaves the display screen. The lift event includes a touch type up, a touch position, and a sampling point. The sampling point of the lift event may be a first sampling point at which the electronic device does not collect the touch position after the finger lifts. The touch position in the lift event may be a touch position of a last move event before the finger lifts. The touch position in the lift event may represent a position at which the finger lifts.

### 6. Bitmap (bitmap)

The bitmap is a representation form of a picture in a memory. The bitmap is a set of a plurality of pixels. Any picture loaded into the memory is a bitmap object.

### 7. Drawable object (drawable)

The drawable may have a plurality of formats. For example, the drawable may be a drawable object (BitmapDrawable) in a bitmap format, may be a drawable object (VectorDrawable) in a vector map format, or may be a customized drawable object (customized drawable).

### 8. Some terms

In the embodiments of this application, words such as "first" and "second" are used to distinguish between same items or similar items with basically same functions and effects. For example, a first chip and a second chip are merely used to distinguish between different chips, and are not intended to limit a sequence of the first chip and the second chip. A person skilled in the art may understand that the words such as "first" and "second" do not limit a quantity or an execution sequence, and the words such as "first" and "second" do not define a definite difference.

It should be noted that the words such as "example" or "for example" in the embodiments of this application are used to indicate an example, an illustration, or a description. Any embodiment or design solution described as "example" or "for example" in this application should not be construed as being preferred or advantageous over other embodiments or design solutions. Exactly, use of the words such as "example" or "for example" is intended to present related concepts in a specific manner.

In the embodiments of this application, "at least one" means one or more, and "a plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" usually indicates an "or" relationship between associated objects. "At least one of the following items" or a similar expression thereof means any combination of these items, including a single item or any combination of a plurality of items. For example, at least one of a, b, or c may represent a, b, c, a-b, a--c, b-c, or a-b-c, where a, b, and c may be singular or plural.

It should be noted that in the embodiments of this application, "when ..." may be an instantaneous occurrence time of a case, or may be a period of time after occurrence of a case, and this is not specifically limited in the embodiments of this application. In addition, a display interface provided in the embodiments of this application is merely an example, and the display interface may further include more or less content.

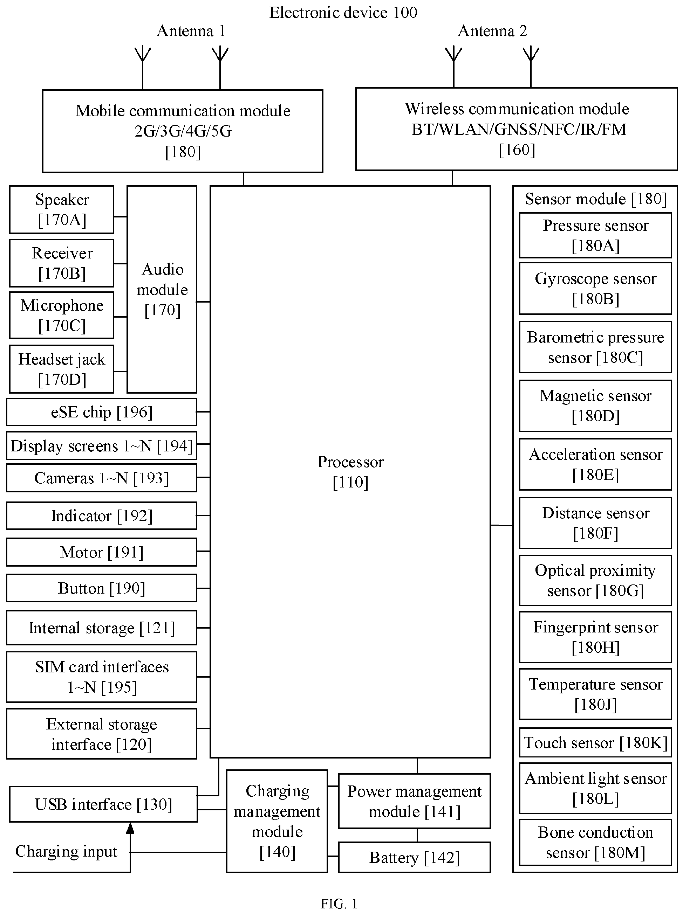

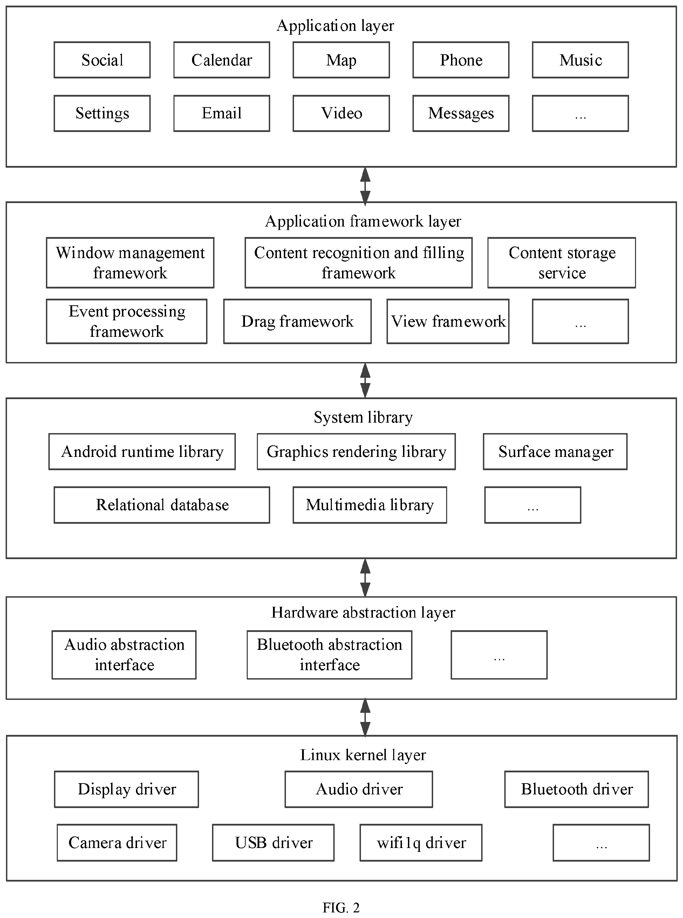

To better understand the embodiments of this application, the following describes a structure of the electronic device in the embodiments of this application with reference to FIG. 1 and FIG. 2.

FIG. 1 is a schematic diagram of a structure of an electronic device 100.

The electronic device 100 may include a processor 110, an external storage interface 120, an internal storage 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The controller may generate an operation control signal based on instruction operation code and a timing signal, to complete control of instruction fetching and instruction execution.

A storage may be further disposed in the processor 110 to store instructions and data. In some embodiments, the storage in the processor 110 is a cache. The storage may store instructions or data recently used or cyclically used by the processor 110. If the processor 110 needs to use the instructions or the data again, the processor may directly invoke the instructions or the data from the storage. This avoids repeated access and reduces a waiting time of the processor 110, thereby improving system efficiency.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, or a quantum dot light emitting diode (quantum dot light emitting diodes, QLED). In some embodiments, the electronic device 100 may include one or N display screens 194, where N is a positive integer greater than 1.

A software system of the electronic device 100 may use a layered architecture, an event-driven architecture, a microkernel architecture, a microservice architecture, or a cloud architecture. In this embodiment of the present invention, an Android system with a layered architecture is used as an example to describe a software structure of the electronic device 100.

FIG. 2 is a block diagram of a software structure of an electronic device 100 according to an embodiment of this application.

In a layered architecture, software is divided into several layers, and each layer has a clear role and task. The layers communicate with each other through software interfaces. In some embodiments, an Android system is divided into five layers: an application layer, an application framework layer, an Android runtime (Android runtime) and system library, a hardware abstraction layer, and a Linux kernel layer from top to bottom.

The application layer may include a series of application packages.

As shown in FIG. 2, the application packages may include applications such as Social, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 2, the application framework layer may include a window management framework, a content recognition and filling framework, a content storage service, a view framework, a drag framework, a resource manager, a notification manager, an event processing framework, and the like.

The window management framework may be configured to manage a window program. The window management framework may obtain a size of a display screen, determine whether a status bar exists, lock a screen, take a screenshot, and so on.

The content recognition and filling framework is a newly added module in this embodiment of this application, and may be configured to obtain content of a control, and create a drag box by using the content, so that the drag framework controls the drag box to move along with a finger, thereby dragging the content of the control.

The content storage service is also a newly added module in this embodiment of this application. The content storage service may be configured to store a bitmap of a picture, and periodically clear the stored bitmap. The bitmap may be used to create a drag box and process a service. The content storage service is a system service, and an unauthorized application cannot obtain information stored in the content storage service. Therefore, the content storage service may improve security of stored information.

The view framework may include a visual control. The visual control is, for example, a text control for displaying a text or a picture control for displaying a picture. The view framework may be configured to construct an application. A display interface may include one or more views. A display interface may include one or more views. Both the text control and the picture control are views. For example, a display interface presented on a chat page of the WeChat application may include a plurality of text controls and a plurality of picture controls.

The resource manager provides various resources for an application, for example, a localized string, an icon, a picture, a layout file, and a video file.

The drag framework may be configured to monitor a change of a touch position in the window management framework, and control the drag box to move as the touch position changes.

The event processing framework is configured to obtain, from the kernel layer, an original input event (including information such as touch coordinates and a timestamp of a touch operation) corresponding to the touch operation, and identify a control corresponding to the input event.

The notification manager enables an application to display notification information in the status bar, and may be configured to convey a notification-type message that may automatically disappear after a short stay without user interaction. For example, the notification manager is configured to provide a notification of download completion, a message reminder, and the like. The notification manager may alternatively be a notification that appears in a top status bar of a system in a form of a graph or scroll bar text, for example, a notification of an application running in the background, or a notification that appears on a screen in a form of a dialog window. For example, text information is prompted in the status bar, an alert sound is made, the electronic device vibrates, or an indicator light blinks.

The Android runtime library (Android Runtime) includes a kernel library and a virtual machine. The Android runtime is responsible for scheduling and management of an Android system.

The kernel library includes two parts: One part is a functional function that needs to be invoked in a java language, and the other part is a kernel library of Android.

The application layer and the application framework layer run on the virtual machine. The virtual machine executes java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a multimedia library, a graphics rendering library (for example, an OpenGL ES), and a relational database.

The surface manager is configured to manage a display subsystem, and provide 2D and 3D layer fusion for a plurality of applications.

The multimedia library supports playing and recording in a plurality of common audio and video formats, a still image file, and the like. The media library may support a plurality of audio and video encoding formats, such as MPEG4, H.264, MP3, AAC, AMR, JPG, and PNG.

The graphics rendering library is configured to implement three-dimensional graphics drawing, image rendering, composition, layer processing, and the like.

The relational database is configured to store preset data.

The hardware abstraction layer may include an audio abstraction interface, a Bluetooth abstraction interface, and the like.

The Linux kernel layer is a layer between hardware and software. The kernel layer may include a display driver, a camera driver, a Bluetooth driver, an audio driver, a USB driver, a wifi1q driver, and the like.

The following describes examples of working procedures of software and hardware of the electronic device 100 with reference to a social application enabling scenario.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. In an example in which the touch operation is a touch single-tap operation, and a control corresponding to the single-tap operation is a control of a social application icon, in a notification panel application, a social application invokes an interface of the application framework layer to enable the social application.

Some electronic devices provide a function of forwarding content in the application. In a possible implementation, content in one application may be transferred to another application in the following manner:
S1: A user taps a display screen of an electronic device and starts an application on the electronic device, for example, an application A. The electronic device displays a display interface of the application A in response to a tap operation of the user. The display interface of the application A may include at least one control, such as a picture control a. The application A may be the WeChat application.
S2: The user taps the picture control a. The electronic device displays a picture of the picture control a and a download control in full screen in response to a tap operation of the user.
S3: The user may tap the download control to save the picture of the picture control a to an album application.
S4: The user taps the display screen or swipes the display screen to switch the application A to the background, or exit the application A.
S5: The user taps the display screen of the electronic device and starts another application on the electronic device, for example, an application B. The application B may be an image processing application, or may be another application, such as a note application. The electronic device displays a display interface of the application B in response to a tap operation of the user. The display interface of the application B may include an add button.
S6: The user taps the add button. The electronic device displays a display interface of the album application in response to a tap operation of the user. The display interface of the album application includes the picture of the picture control a.
S7: The user may tap the picture of the picture control a in the display interface of the album application. The electronic device adds the picture of the picture control a to the display interface of the application B in response to a tap operation of the user.
S8: The user may perform an operation on the display interface of the application B, so as to process the picture of the picture control a.

In this way, the picture of the picture control a is transferred and processed between different applications (for example, the application A and the application B).

However, the transfer of the picture of the picture control a between the application A and the application B requires the user to perform the tap operation twice on the picture of the picture control a to complete copying and storage of the picture of the picture control a. Operations are relatively cumbersome, which may degrade user experience of using the electronic device.

In view of this, an embodiment of this application provides a picture dragging method. When a user touches and holds a target control, if an electronic device determines that a format of a drawable object of the target control is not a first format (for example, a bitmap format), the electronic device redraws the drawable object of the target control to obtain a drawn picture, where content of the drawn picture includes picture content of the target control, so as to copy and store the picture content of the target control, thereby reducing a quantity of operations of copying the picture content of the target control. In addition, the electronic device may further create a drag box so that the drag box displays the drawn picture, so as to prompt, by displaying the drag box, the user that the picture content of the target control has been copied and stored, so that the user can perform dragging. The drag box may move along with a first touch operation. The electronic device may further start a second application in a movement process of the first touch operation, so as to further reduce a quantity of operations of enabling a service for receiving the picture content of the target control, thereby improving user experience of using the electronic device.

The first application may be any application on the electronic device. For example, the first application may be the WeChat application, the QQ application, a note application, a music application, or an image processing application.

The following describes the picture dragging method provided in this application with reference to some embodiments.

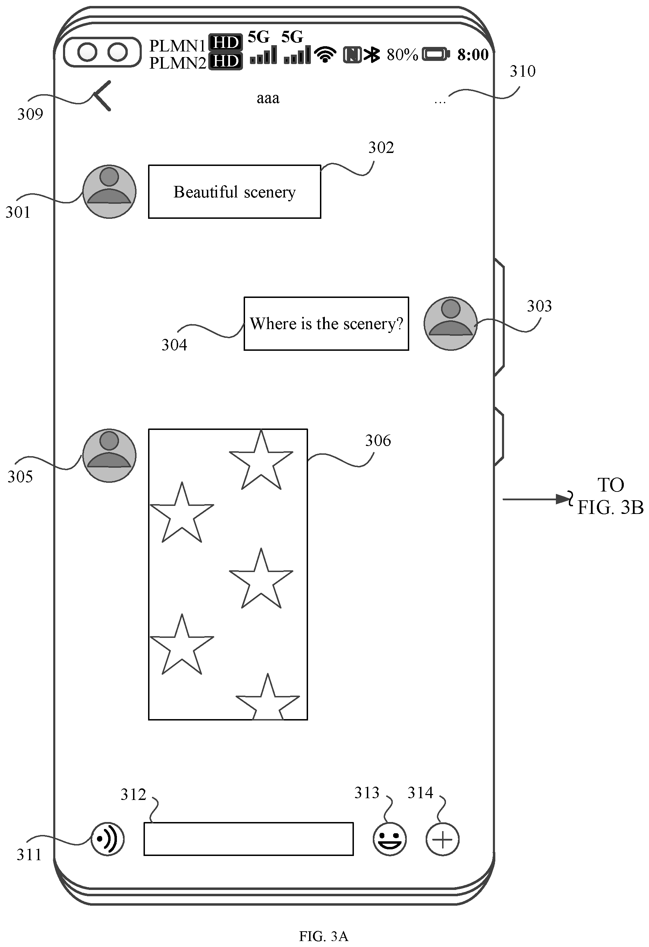

For example, the first application is the WeChat application, and a target page of the first application is a chat page of the WeChat application. FIG. 3A to FIG. 3H are diagrams of a picture dragging scenario according to an embodiment of this application.

The user may tap the display screen of the electronic device and open the target page of the first application. The electronic device may display an interface shown in FIG. 3A. The interface shown in FIG. 3A includes a control 301, a control 302, a control 303, a control 304, a control 305, a control 306, a control 309, a text "aaa", a control 310, a control 311, an input box 312, a control 313, and a control 314. The control 301, the control 303, the control 305, and the control 306 may be all picture controls. The picture control may be a control that includes a picture. Both the control 302 and the control 304 may be text controls. The text control includes text content. As shown in FIG. 3A, the control 301, the control 303, and the control 305 may be WeChat profile pictures. The control 302, the control 304, and the control 306 may be chat content, and the control 306 may be a picture shot by the user by using the electronic device. The control 309 is a control that represents a return. aaa represents a friend nickname. The control 310 is a control that represents more. The control 311 is a control that represents a voice. The control 313 is a control that represents an expression. The control 314 is a control that represents an addition.

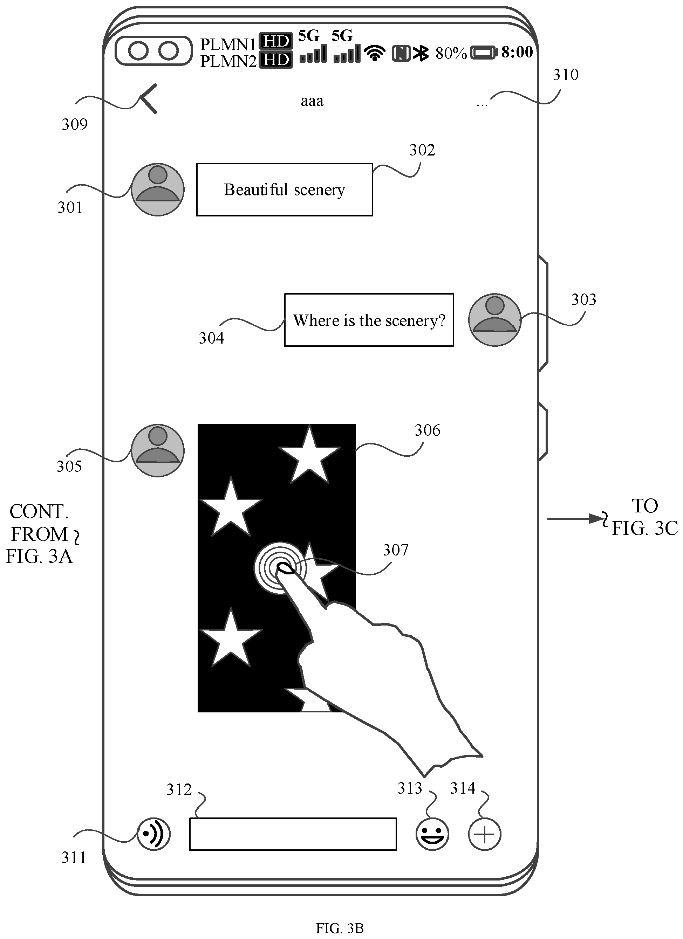

In the interface shown in FIG. 3A, the user may touch and hold the control 306, and the electronic device may display an interface shown in FIG. 3B in response to the touch and hold operation. The interface shown in FIG. 3B may include a touch and hold feedback 307. For other display content in the interface shown in FIG. 3B, refer to content in the interface shown in FIG. 3A. Details are not described herein again. The touch and hold feedback 307 may be displayed, in a superimposition manner, in an interface above the interface of the control 306 corresponding to the touch and hold position. In the interface shown in FIG. 3B, the control 306 is displayed with a shadow. The control 306 being displayed with a shadow may be used to prompt the user that the electronic device is generating a drag box.

It may be understood that, when the user touches and holds the display screen of the electronic device, a touch and hold feedback appears on the electronic device. The touch and hold feedback may be a visual feedback, or may be a tactile feedback. The visual feedback may be the touch and hold feedback 307 shown in FIG. 3B. If the touch and hold feedback is a tactile feedback, the touch and hold feedback is invisible.

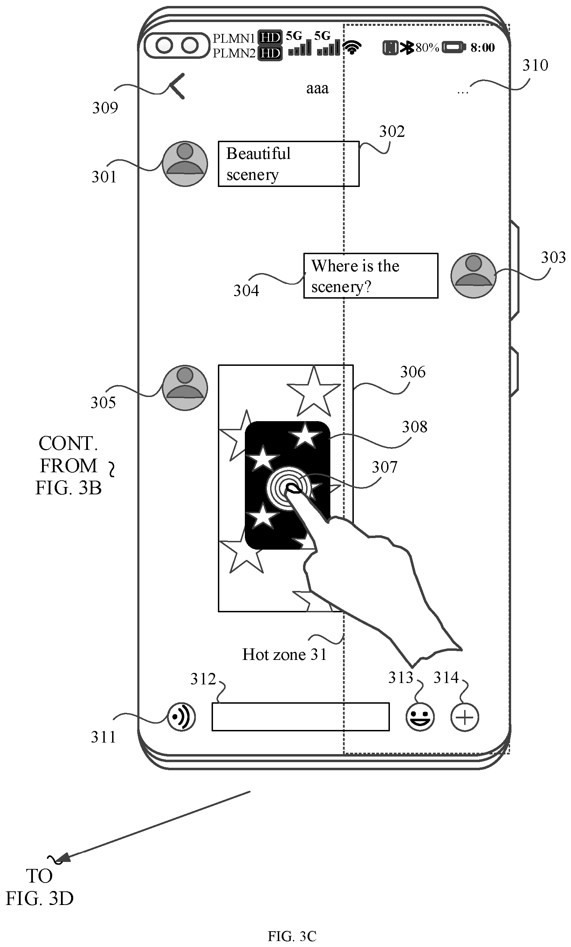

In the interface shown in FIG. 3B, the user's finger may keep the touch and hold operation, and the electronic device may display an interface shown in FIG. 3C. The interface shown in FIG. 3C includes a drag box 308, and a position of the drag box 308 is the same as a touch position of the finger. The drag box 308 includes picture content of the control 306, a shadow of the drag box, and a rounded corner of the drag box. The drag box 308 may be generated by the electronic device by using the picture content of the control 306 in response to the touch and hold operation of the user in the interface shown in FIG. 3B. For other display content in the interface shown in FIG. 3C, refer to content in the interface shown in FIG. 3B. Details are not described herein again. In the interface shown in FIG. 3C, the control 306 is displayed without a shadow.

It may be understood that a hot zone may be disposed on the display screen of the electronic device. For example, the hot zone may be a hot zone 31 shown in FIG. 3C. The hot zone 31 is invisible. The hot zone may represent a preset region, and when the user's finger touches the hot zone, the second application may be started. The second application may be configured to provide an entry for transferring the content in the drag box.

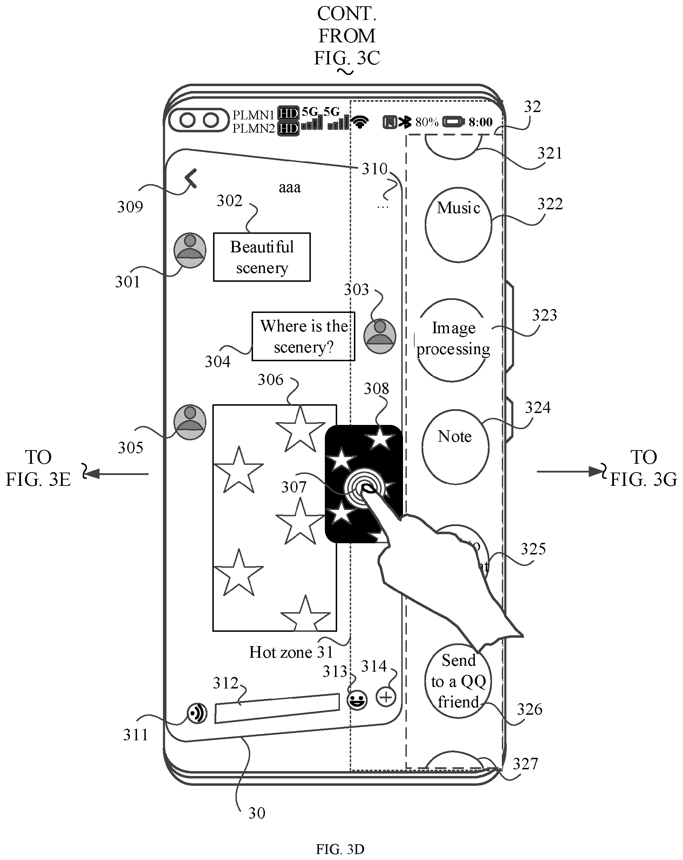

In the interface shown in FIG. 3C, the user may move the finger so that the drag box 308 moves along with the finger. When the finger moves to the hot zone 31 of the display screen of the electronic device, the electronic device may display an interface shown in FIG. 3D.

The interface shown in FIG. 3D includes a drag box 308, a page window 30 of the first application, a sidebar 32, and an invisible hot zone 31. The sidebar 32 includes an icon 321 of the QQ application, an icon 322 of the music application, an icon 323 of the image processing application, an icon 324 of the note application, an icon 325 of a service for sending to a WeChat state, an icon 326 of a service for sending to a QQ friend, and an icon 327 of the video application. The drag box 308 is above the page window 30. The drag box 308 may be displayed in an interface above the page window 30. For content in the page window 30, refer to the content in the interface shown in FIG. 3A. Details are not described herein again.

The sidebar 32 may represent a window of the second application. The window of the second application includes a plurality of sub-service icons. A sub-service may be any application on the electronic device, or may be any service provided by the application. For example, the sub-service may be an application such as the QQ application, the WeChat application, the note application, the music application, or the image processing application. The sub-service may alternatively be a service such as a service for sending to a WeChat state provided by the WeChat application or a service for sending to a QQ friend provided by the QQ application.

The sub-service icon may be movably displayed in the sidebar 32. The user may drag the drag box 308 to a position above the target sub-service icon, so that the target sub-service performs service processing by using picture content of the control 306.

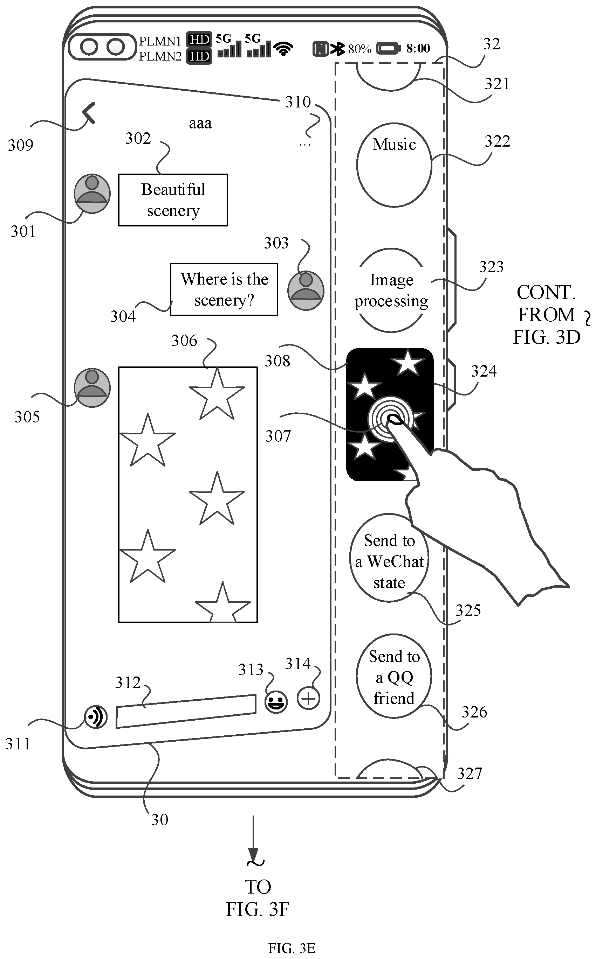

For example, the target sub-service is a note processing application. In the interface shown in FIG. 3D, the user may drag the drag box 308 to a position above the icon 324 of the note application by moving a finger. The electronic device may display an interface shown in FIG. 3E. For content in the interface shown in FIG. 3E, refer to the content in the interface shown in FIG. 3D. A difference between the interface shown in FIG. 3E and the interface shown in FIG. 3D lies in that in the interface shown in FIG. 3E, the drag box 308 is located above the icon 324 of the note application in the sidebar 32.

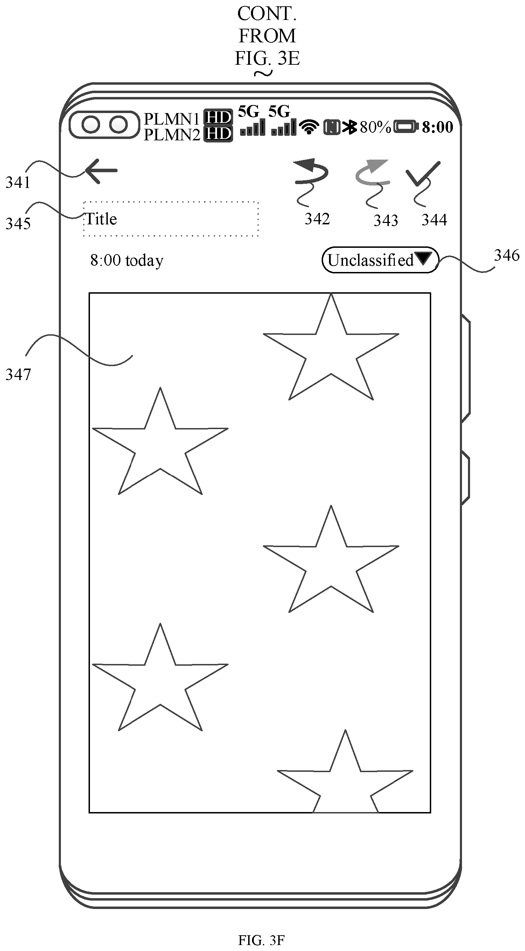

In the interface shown in FIG. 3E, the user may lift a finger, and the electronic device may display an interface shown in FIG. 3F. The interface shown in FIG. 3F includes a control 341 that represents a return, a control 342 that represents a previous step, a control 343 that represents a next step, a control 344 that represents a selection, a title input box 345, a text "8:00 today", a control 346 that represents a classification, and picture content 347 of the control 306.

The user drags the drag box 308 to a position above the icon 324 of the note application. When the finger lifts, the second application identifies that an icon corresponding to a touch position of a lift event is the icon of the note application, and the second application may determine that the target sub-service is the note application. The second application may start the note application, so that the note application obtains the picture content of the control 306. Further, the electronic device is enabled to display a page shown in FIG. 3F, so that the user can continue to perform an operation on the page shown in FIG. 3F.

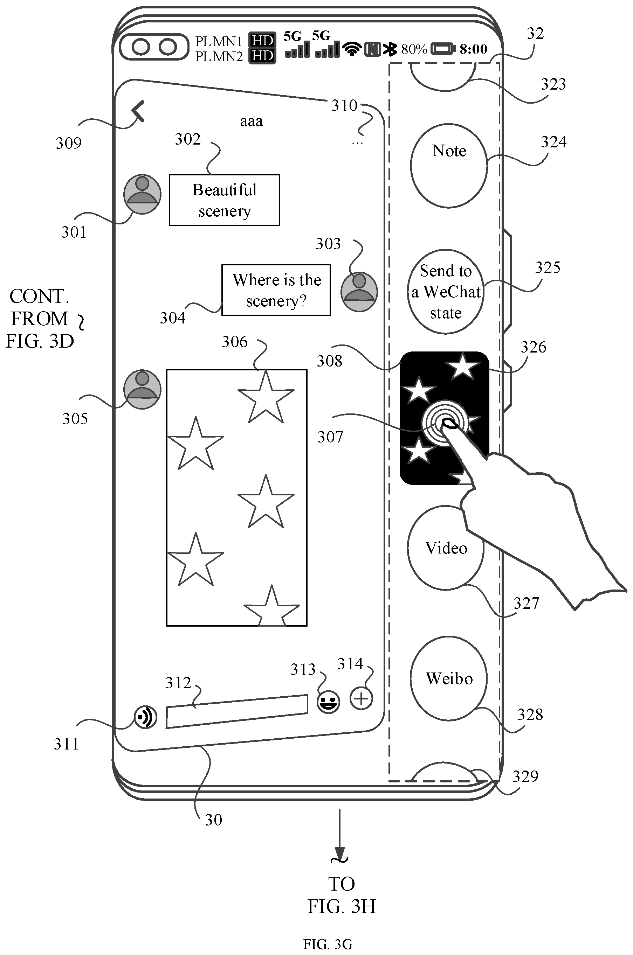

For example, the target sub-service is a service for sending to a QQ friend provided by the QQ application. In the interface shown in FIG. 3D, the user may drag, by moving a finger, the drag box 308 to a position above the icon 326 of the service for sending to a QQ friend. The electronic device may display an interface shown in FIG. 3G. The interface shown in FIG. 3G includes a page window 30, a sidebar 32, a drag box 308, and a touch and hold feedback 307. The sidebar 32 includes an icon 323 of the image processing application, an icon 324 of the note application, an icon 325 of a service for sending to a WeChat state, an icon 326 of a service for sending to a QQ friend, an icon 327 of the video application, an icon 328 of a Weibo application, and an icon 329 of an album application. In the interface shown in FIG. 3G, the drag box 308 is located above the icon 326 of the service for sending to a QQ friend in the sidebar 32.

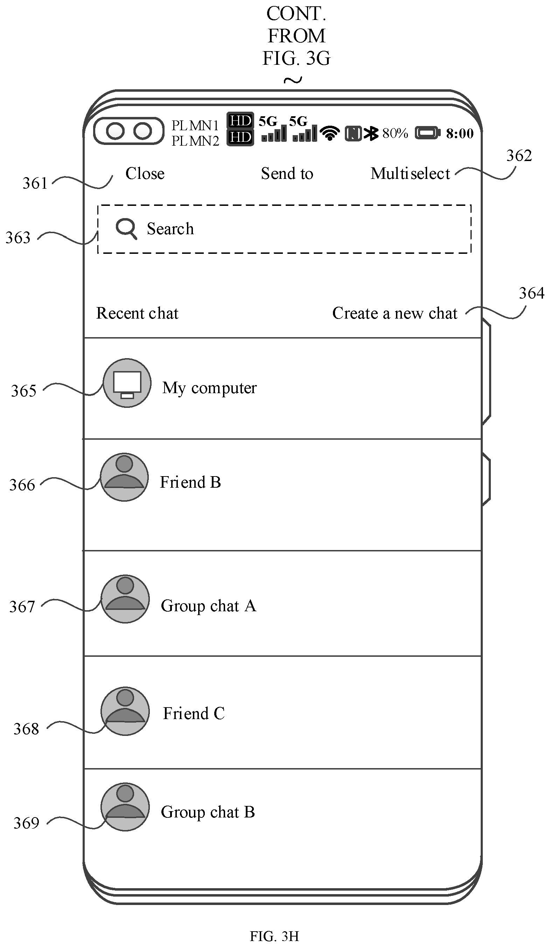

In the interface shown in FIG. 3G, the user may lift a finger, and the electronic device may display an interface shown in FIG. 3H. The interface shown in FIG. 3H includes a close control 361, a text "send to", a multiselect control 362, a search box 363, a text "recent chat", a control 364 for creating a new chat, a control 365 of my computer, a control 366 of a friend B, a control 367 of a group chat A, a control 368 of a friend C, and a control 369 of a group chat B.

The user drags the drag box 308 to a position above the icon 326 of the service for sending to a QQ friend. When the finger lifts, the second application identifies that an icon corresponding to a touch position of a lift event is the icon of the service for sending to a QQ friend. The second application determines that the target sub-service is the service for sending to a QQ friend. The second application starts the QQ application, so that the QQ application starts the service for sending to a QQ friend. Further, the service for sending to a QQ friend is enabled to obtain the picture content of the control 306, and the electronic device is enabled to display the interface shown in FIG. 3H, so that the user can continue to perform an operation in the interface shown in FIG. 3H. In the interface shown in FIG. 3H, the user may select a friend or a group chat by tapping a friend control or a group chat control. The picture of the control 306 will be sent to the selected friend or group chat. The friend control is, for example, the control 366 of the friend B or the control 368 of the friend C in the interface shown in FIG. 3H. The group chat control is, for example, the control 367 of the group chat A or the control 369 of the group chat B in the interface shown in FIG. 3H.

According to the picture dragging method provided in this embodiment, when the user touches and holds a target control (for example, the control 306), picture content of the target control is copied. Displaying the drag box may prompt the user that the picture content of the target control has been copied, so that the user can drag the drag box. When the user drags the drag box and moves the drag box to a position above an icon of a target sub-service, the user may perform a lift operation. In response to the lift operation of the user, the second application identifies the target sub-service and starts the target sub-service, so that the sub-service obtains the picture content of the target control in a timely manner, so as to perform service processing. According to the picture dragging method provided in this embodiment, the user touches and holds the target control and then moves a finger, so that the picture content of the target control can be transferred to the target sub-service. In this way, the picture of the target control can be copied without a need to tap the picture of the target control twice. In addition, the user does not need to perform a tap operation on an application corresponding to the target sub-service a plurality of times, and the second application can start the target sub-service, so that the target sub-service obtains the picture content of the target control. An overall operation is simple and convenient, thereby improving user experience of using the electronic device.

The scenario in which the picture of the target control of the first application is dragged is described above with reference to the drag scenario shown in FIG. 3A to FIG. 3H.

In the drag scenario shown in FIG. 3A to FIG. 3H, a format of the picture control in the first application may be a second format, or may not be a second format. The format of the picture control is the second format, for example, the format of the picture control is an inherited ImageView format. The inherited Image View may represent that an implementation of a native picture control (ImageView) of Android (android) is inherited. The implementation of the native picture control (ImageView) of Android (android) is, for example, a code writing manner and a design mode of the native picture control (ImageView) of Android (android). The format of the picture control of the first application being an inherited ImageView format may be understood that an implementation of the picture control of the first application inherits the implementation of the native picture control (ImageView) of Android (android). It may be understood that the format of the picture control of the first application is the inherited Image View format, the implementation of the picture control of the first application inherits the implementation of the native picture control (ImageView) of Android (android), and the implementation of the picture control of the first application may further extend a function of the native ImageView. The format of the picture control is not the second format. For example, the format of the picture control is not the inherited ImageView format, or the format of the picture control is a non-inherited ImageView format. The non-inherited ImageView format may be a format customized by an application developer (or a third party).

The picture control in the inherited ImageView format can actively report the picture content of the picture control. The picture control in the non-inherited ImageView format cannot actively report the picture content of the picture control. The format of the picture control may be set by a developer of the first application.

The following separately describes a picture dragging method in a scenario in which the picture control of the first application can actively report the picture content, and a picture dragging method in a scenario in which the picture control of the first application cannot actively report the picture content.

For the scenario in which the picture control of the first application can actively report the picture content, FIG. 4A to FIG. 4C are flowcharts of module interaction according to an embodiment of this application.

As shown in FIG. 4A to FIG. 4C, the picture dragging method provided in this embodiment of this application includes:
S100: A user opens an interface of a first application.

For example, the user may tap a display screen of an electronic device and open a target page of the first application.

S101: An application (APP) loads content of each view (view) on a target page to a view framework (view framework).

In this way, each control and content of each control on the target page are easily displayed. The target page displayed by the electronic device may be an interface shown in FIG. 3A.

It may be understood that each time the user opens one page of the first application, the application loads content of each view on the page by using the view framework. For example, the user opens a page A of the first application, and the application loads content of each view on the page A by using the view framework. The user switches the page A of the first application to a page B, and the application loads content of each view on the page B by using the view framework.

S102: The view framework transfers a root layout of the target page to the content recognition and filling framework.

For example, when the view framework obtains the content of each view on the target page, the root layout of the target page may be generated. The root layout may include DecorView. The view framework transfers the root layout to the content recognition and filling framework.

It may be understood that each time the user opens one page, the view framework may transfer, to the content recognition and filling framework, the root layout of the page opened by the user.

The content recognition and filling framework obtains the root layout of the target page, so that the required picture control is subsequently found from the root layout. It may be understood that the picture control is a view (view).

S103: The content recognition and filling framework determines whether an application package name and/or a page name of the target page is in a whitelist.

For example, the whitelist may include a plurality of application package names (package name) that support system drag, a plurality of page names (activity name) that support system drag, and a plurality of control names (view name) that support system drag. Optionally, the whitelist may further include a type (type) of a control corresponding to a control name. For example, a whitelist style may be shown as follows:

```
         <?xml version="1.0" encoding="ut f-8"?>
         <package_config>
              <whiteList>
                  < package name="com.XXXXX.xhs">
                  < /package>
                  < package name="com. XXX.uu">
                      < activity name="com.XXX.MainActivity">
                          < view name="activitya_viewa" type="text"/>
                          < view name="activitya_viewb" type ="image"/>
                      < /activity >
                      < activity name="com.XXX.TextMainActivity2">
                      < /activity >
                  < / package >
                  < package name="com.XXX. XXX">
                          < view name="ccTextView" type="text"/>
                          < view name="ddView" type="image"/>
                  < /package>
              </whiteeList>
         </package_config>
```

Herein, version represents a version; encoding represents encoding; whiteList represents the whitelist; com.XXXXX.xhs is an application package name; com.test.white.demo is an application package name; com.XXX. XXX is an application package name; com.XXX.MainActivity is a page name; com.XXX.TextMainActivity2 is a page name; activitya_viewa is a control name; activitya_viewb is a control name; ccTextView is a control name; ddView is a control name; the control name may represent a class (class) of a control on a page to which the control belongs; type is a type; text in type="text" represents a text type; and image in type="image" represents a picture type.

Types corresponding to controls with different control names may be different, or may be the same. For example, < view name="activitya_viewa" type="text"/> may represent that a type of a control whose control name is activitya_viewa is a text type, or that a control whose control name is activitya_viewa is a text control. < view name="activitya_viewb" type ="image"/> may represent that a type of a control whose control name is activitya_viewb is a picture type, or that a control whose control name is activitya_viewb is a picture control. < view name="ddView" type="image"/> may represent that a type of a control whose control name is ddView is also a picture type, or that a control whose control name is ddView is a picture control.

Control names of different controls may be the same, or may be different. For example, a page name of the interface shown in FIG. 3B is com.XXX.MainActivity. Control names of the control 301, the control 303, the control 305, and the control 306 may be all activitya_viewb. Control names of both the control 302 and the control 304 may be activitya_viewa.

The content recognition and filling framework may determine whether an application package name and/or a page name of the root layout is in the whitelist. For example, based on the application package name and/or the page name of the root layout, the content recognition and filling framework checks whether the application package name and/or the page name is included in a pre-stored whitelist.

S104: The content recognition and filling framework transmits a determining result to the view framework.

For example, the determining result may include a negative determining result or a positive determining result. The negative determining result is, for example, false. The positive determining result is, for example, true.

If neither the application package name nor the page name of the target page is in the whitelist, the content recognition and filling framework may transmit false to the view framework. In this way, after subsequently receiving a drop event of touching the control of the first application, the view framework may not need to transfer the drop event to the content recognition and filling framework, thereby terminating a subsequent drag procedure. Neither the application package name nor the page name of the target page is in the whitelist, which may represent that the first application does not support system drag. That the first application does not support system drag may represent that the first application is a protected application. When it is determined that neither the application package name nor the page name of the root layout is in the whitelist, a subsequent drag-related action may not be performed, so as to save power consumption of the electronic device due to invalid dragging, and ensure that information about the protected first application is not spread due to arbitrary dragging by the user.

If the application package name and/or the page name of the target page is in the whitelist, the content recognition and filling framework may transmit true to the view framework. In this way, after receiving a drop event of touching the control of the first application, the view framework may transfer the drop event to the content recognition and filling framework, thereby continuing a subsequent drag procedure.

S200: The event processing framework obtains a touch event indicating that the target control is touched.

For example, the target control may be any picture control on the target page. In this embodiment, an example in which the target control is the control 306 in the interface shown in FIG. 3B is still used for description. The touch event indicating that the target control is touched may include a drop event and a move event. For example, when the user's finger touches and holds the target control and the finger does not lift, the event processing framework may successively obtain a drop event and at least one move event.

S201: The event processing framework transfers the touch event to the window management framework.

For example, in response to the touch and hold operation of the user, the event processing framework successively transfers the drop event and the move event to the window management framework.

It may be understood that, as long as the finger does not lift, the event processing framework continuously transfers a move event to the window management framework.

S202: The window management framework transfers the touch event to the view framework.

S203: If the view framework receives the positive determining result transmitted by the content recognition and filling framework, the view framework transfers the touch event to the content recognition and filling framework.

For example, if the view framework receives the true transmitted by the content recognition and filling framework in step S104, when the view framework receives the drop event, the view framework transfers the drop event to the content recognition and transmission framework. When the view framework receives the move event, the view framework transfers the move event to the content recognition and transmission framework.

Optionally, if the view framework receives the false transmitted by the content recognition and filling framework in step S104, when the view framework receives the drop event, the view framework does not transfer the drop event to the content recognition and filling framework, thereby terminating a subsequent drag procedure. When the view framework receives the move event, the view framework does not transfer the move event to the content recognition and transmission framework, either.

S204: The content recognition and filling framework sets a third timer in response to the drop event.

For example, third timing duration of the third timer is a sum of system touch and hold duration of the electronic device and first extension duration, that is, third timing duration = system touch and hold duration + first extension duration. The third timer may be a message processing class handler.

The system touch and hold duration is duration used to determine an intention of touch and hold in a native system of the electronic device. The system touch and hold duration may be 400 milliseconds. The first extension duration may be 50 milliseconds.

The third timing duration being greater than the system touch and hold duration, on the one hand, may implement compatibility between the picture dragging method provided in this embodiment of this application and native system logic of the electronic device, and on the other hand, may be used to determine whether an intention of touch and hold by the user is a drag intention, and may be further used to guide further determining of the intention of touch and hold by the user.

For example, if the electronic device displays a new window around the target control when duration of touch and hold by the user reaches the system touch and hold duration, when the third timer reaches the third timing duration, the content recognition and filling framework may perform steps S209-S213, so as to further determine whether a real intention of touch and hold by the user is a drag intention or an intention for performing an operation on the new window.

If the electronic device does not display a new window around the target control when the duration of touch and hold by the user reaches the system touch and hold duration, when the third timer reaches the third timing duration, the content recognition and filling framework may determine that the real intention of touch and hold by the user is a drag intention. In this case, the content recognition and filling framework does not need to further determine the intention of touch and hold by the user, but directly performs a drag-related action, without a need to perform further determining of the intention of touch and hold by the user.

For example, after the third timer is set, there may be a scenario in which a finger touches and holds, a finger moves, or a finger lifts. The content recognition and filling framework may receive a move event, or may receive a lift event.

After the third timer is set, and before the third timer exceeds the third timing duration, if the content recognition and filling framework receives a move event, the content recognition and filling framework may determine whether a distance between a touch position of the move event and a touch position of a drop event exceeds a second threshold. Optionally, the second threshold and the first threshold may be the same, or may be different.

If the distance between the touch position of the move event and the touch position of the drop event exceeds the second threshold, it may represent that an operation of the user is a move operation or a finger movement, and it may further represent that an operation intention of the user is not a drag intention. In this case, the content recognition and filling framework cancels the third timer, thereby terminating a subsequent drag-related action.

If the distance between the touch position of the move event and the touch position of the drop event does not exceed the second threshold, it may represent that the operation of the user is a touch and hold operation or touch and hold by a finger, and it may further represent that the operation intention of the user may be a drag intention, or may be an intention of causing the electronic device to display a new window. In this case, the content recognition and filling framework does not perform processing.

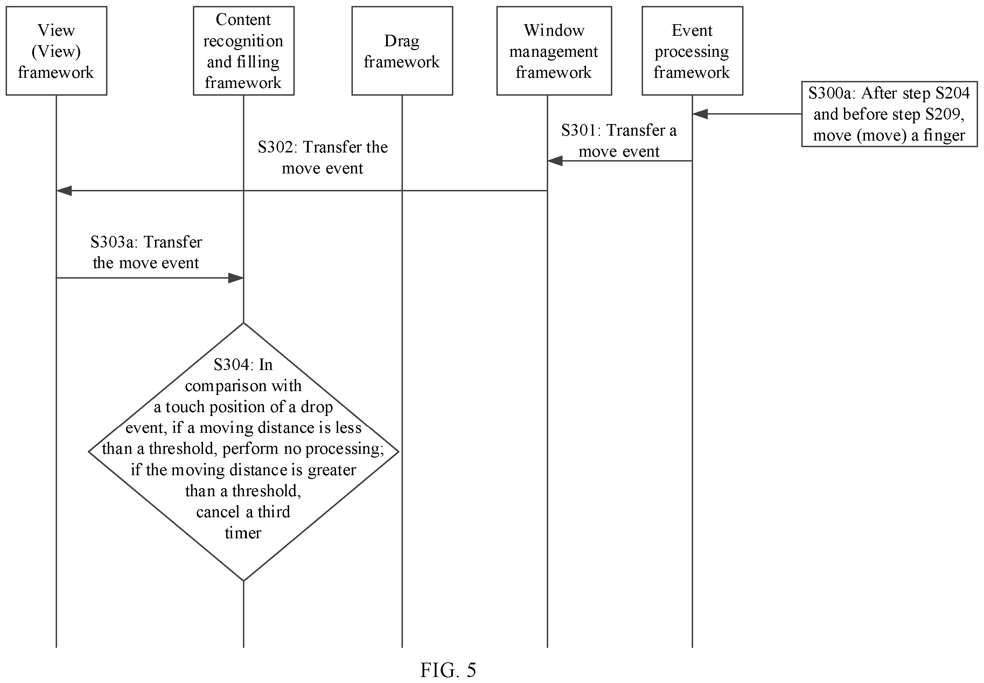

FIG. 5 below is a flowchart of module interaction in a finger movement scenario before the third timer exceeds the third timing duration. For ease of understanding, a module interaction procedure shown in FIG. 5 is described below.

After the third timer is set, and before the third timer exceeds the third timing duration, if the content recognition and filling framework receives a lift event, it may represent that an operation of the user is a lift operation or a finger lift, and it may further represent that an operation intention of the user is not a drag intention. In this case, the content recognition and filling framework cancels the third timer, thereby terminating a subsequent drag-related step. A procedure in which the content recognition and filling framework receives the lift event is similar to a procedure in which the content recognition and filling framework receives the drop event. Details are not described herein again.

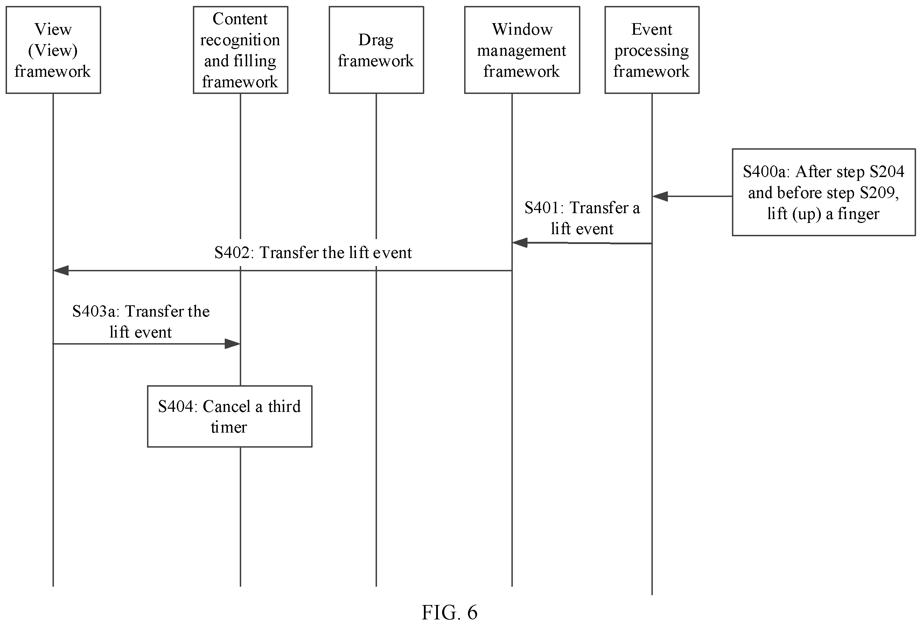

FIG. 6 below is a flowchart of module interaction in a finger lifting scenario before the third timer exceeds the third timing duration. For ease of understanding, a module interaction procedure shown in FIG. 6 is described below.

When the third timer reaches the third timing duration, the content recognition and filling framework performs step S209.

Optionally, before the third timer exceeds the third timing duration and a drag box is created, if the content recognition and filling framework determines, based on the move event or the lift event, that the operation of the user is a move operation or a lift operation, indicating that the operation intention of the user is not a drag intention. In this case, the content recognition and filling framework may terminate a subsequent drag-related step.

Both the move operation and the lift operation represent that the operation intention of the user is not a drag intention. When determining that the operation intention of the user is not a drag intention, the content recognition and filling framework cancels the third timer or terminates a subsequent drag-related step. In this way, power consumption of the electronic device may be further reduced.

S205: The touch event is internally transferred in the view framework.

For example, after receiving the drop event, the view framework causes, based on a touch position of the event, the drop event to be transferred in the root layout of the target page.

For example, the drop event may be transferred layer by layer in a manner of application -> page -> control.

In this way, if the format of the target control is the inherited ImageView format, the target control may perform step S206 when receiving the drop event.

It may be understood that when the user touches and holds the target control, the touch event includes a drop event and a move event. A specific implementation of internal transfer of the move event in the view framework is similar to a specific implementation of internal transfer of the drop event in the view framework, and details are not described herein again.

Optionally, steps S203 and S205 may be performed concurrently.

S206: In the view framework, the target control receives the drop event, and the target control reports a view entity of the target control to the content recognition and filling framework.

For example, in this embodiment, an implementation of the target control of the first application inherits an implementation of a native picture control (imageview), and supports reporting of the view entity corresponding to the target control to the content recognition and filling framework. The view entity is, for example, Object. The view entity includes information such as a specific name of the target control, picture content, a picture width, a picture length, and a position of a picture in the window. The position of the picture in the window may be referred to as a display position of the picture or a display position of the target control.

S207: The content recognition and filling framework determines that the view entity reported by the target control is a valid view entity.

For example, the content recognition and filling framework may invoke a control name obtaining method to obtain the control name of the target control from the view entity.

The content recognition and filling framework determines whether the control name of the target control is in the whitelist.

If the control name of the target control is in the whitelist, the content recognition and filling framework determines that the reported view entity is a valid view entity, and may store the view entity in a memory, so that a subsequent drag-related step is easily performed.

If the control name of the target control is not in the whitelist, the content recognition and filling framework determines that the reported view entity is an invalid view entity. In this case, the content recognition and filling framework cancels the third timer, and clears the obtained view entity and touch event, thereby terminating a subsequent drag-related action. This may save power consumption of invalid dragging.

For example, the control name of the target control is activitya_viewb, and the control name obtaining method is Object.getClass().getSimpleName(). For example, the content recognition and filling framework may invoke the Object.getClass().getSimpleName() to obtain the control name activitya_viewb from the view entity.

The content recognition and filling framework determines that activitya_viewb is in the whitelist, and the content recognition and filling framework determines that the view entity reported by the target control is a valid view entity. The content recognition and filling framework stores, in a memory, the view entity reported by the target control.

S208: The view framework responds to the touch event.

For example, the view framework may set a second timer in response to the drop event. Timing duration of the second timer may be second timing duration, and the second timing duration is equal to system touch and hold duration.

Before the second timer reaches the system touch and hold duration, if the view framework receives the move event, the view framework determines whether the distance between the touch position of the move event and the touch position of the drop event exceeds the first threshold. If the distance exceeds the first threshold, the view framework cancels the second timer. If the distance does not exceed the first threshold, the view framework does not perform processing.

Before the second timer reaches the system touch and hold duration, if the view framework receives the lift event, the view framework cancels the second timer.

When the second timer reaches the system touch and hold duration, the view framework performs a step related to touch and hold of the native system of the electronic device. For example, the view framework may perform a related step of displaying a new window around the target control.

For details about a scenario in which the view framework displays a new window around the target control, refer to detailed descriptions in subsequent step S210.

The related step performed by the view framework in response to the touch event is logic of the native system of the electronic device. The content recognition and filling framework determines, by using the third timer, that the intention of the touch and hold operation of the user is a drag intention, and the view framework determines, by using the second timer, that the intention of the touch and hold operation of the user is an intention of displaying a new window, and the third timing duration of the third timer of the content recognition and filling framework is greater than the second timing duration of the second timer. This ensures that the picture dragging method provided in this embodiment of this application is compatible with the logic of the native system, and the picture dragging method provided in this embodiment of this application does not affect execution logic of the native system of the electronic device.

Optionally, S206 and S208 may be performed concurrently.

S209: The third timer reaches the third timing duration, and the content recognition and filling framework queries, from the window management framework, whether a new window is displayed around the target control.

For example, when duration of touching and holding the target control by the user reaches the system touch and hold duration, the electronic device may display a new window around the target control, or may not display a new window. Therefore, when the third timer reaches the third timing duration, the content recognition and filling framework needs to query, from the window management framework, whether a new window is displayed around the target control, so as to determine, based on whether the new window is displayed, whether a real intention of the touch and hold operation of the user is an intention of causing the electronic device to display a new window, or a drag intention.

The third timing duration is greater than the system touch and hold duration, so that an occasion for performing this step by the content recognition and filling framework is later than an occasion for displaying a new window around the target control by the electronic device. This may reduce an occurrence probability that a query result for displaying a new window is inaccurate because a query occasion for displaying the new window is earlier than an occasion for displaying the new window.

S210: The window management framework determines that a new window is displayed around the target control.

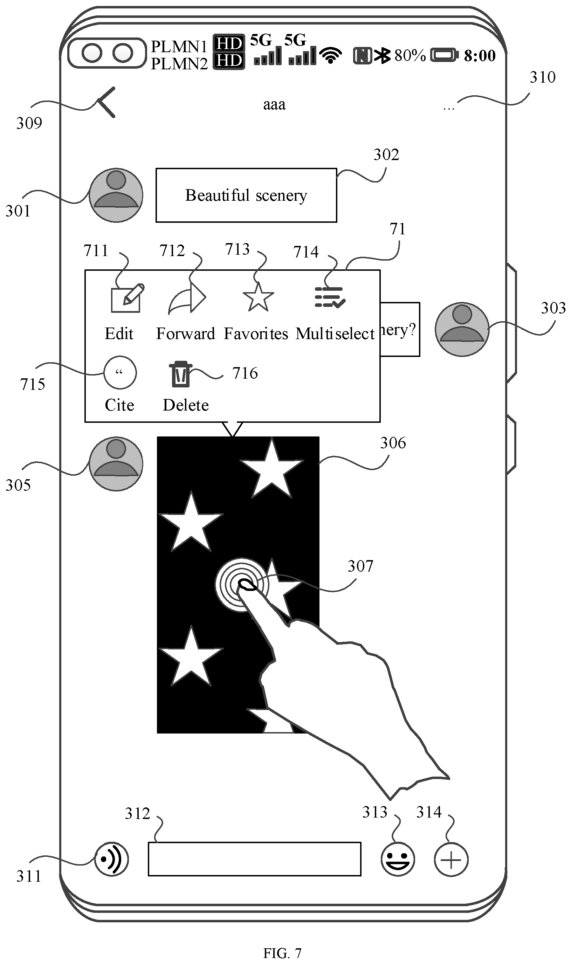

For example, FIG. 7 is a scenario diagram of displaying a new window around a target control by an electronic device according to an embodiment of this application. When the second timer reaches the system touch and hold duration, the electronic device may display an interface shown in FIG. 7. The interface shown in FIG. 7 includes a new window 71. A display position of the new window 71 is around the target control. The new window 71 may include an edit control 711, a forward control 712, a favorites control 713, a multiselect control 714, a cite control 715, and a delete control 716. For other content in the interface, refer to the content in the interface shown in FIG. 3B. Details are not described herein again.

After the window management framework determines that a new window is displayed around the target control, the window management framework may perform step S211.

Optionally, if the window management framework determines that no new window is displayed around the target control, the window management framework may notify the content recognition and filling framework that no new window is displayed, and the content recognition and filling framework may determine that a real intention of the touch and hold operation of the user is a drag intention. In this case, the content recognition and filling framework does not perform steps S212-S213, but directly performs step S214a. In this way, power consumption of performing steps S212-S213 may be reduced, and a drag box may be further generated in a timely manner, thereby improving user experience.

S211: The window management framework notifies the content recognition and filling framework to display a new window.

If a new window is displayed around the target control, there are two possibilities of the intention of the touch and hold operation of the user, namely, a drag intention and a non-drag intention. The non-drag intention is, for example, that the user may perform an operation on the displayed new window. Therefore, the content recognition and filling framework needs to perform step S212 to further determine the real operation intention of the user.

S212: The content recognition and filling framework sets a fourth timer. Fourth timing duration of the fourth timer is equal to second extension duration.

The second extension duration may be the same as or different from the first extension duration.

For example, the second extension duration may be greater than the first extension duration. For example, the second extension duration may be 100 milliseconds.

S213: The fourth timer reaches the fourth timing duration, and the content recognition and filling framework determines that the user's finger does not move or lift.

For example, the fourth timer may be a message processing class handler.

After the fourth timer is set, there may be a scenario in which a finger touches and holds, a finger moves, or a finger lifts. The content recognition and filling framework may receive a move event, or may receive a lift event.

After the fourth timer is set, and before the fourth timer exceeds the fourth timing duration, if the content recognition and filling framework receives a move event, the content recognition and filling framework may determine whether a distance between a touch position of the move event and a touch position of a drop event exceeds a second threshold.

If the distance between the touch position of the move event and the touch position of the drop event exceeds the second threshold, it may represent that an operation of the user is a move operation or a finger movement, and it may further represent that an operation intention of the user is not a drag intention. In this case, the content recognition and filling framework cancels the fourth timer, thereby terminating a subsequent drag-related step.

If the distance between the touch position of the move event and the touch position of the drop event does not exceed the second threshold, it may represent that the operation of the user is a touch and hold operation or touch and hold by a finger, and it may further represent that the operation intention of the user may be a drag intention, or may be an intention for performing an operation on the new window. In this case, the content recognition and filling framework does not perform processing.

After the fourth timer is set, and before the fourth timer exceeds the fourth timing duration, if the content recognition and filling framework receives a lift event, it represents that an operation of the user is a lift operation or a finger lift, and it may further represent that an operation intention of the user is not a drag intention. In this case, the content recognition and filling framework cancels the fourth timer, thereby terminating a subsequent drag-related step.

When a first event received by the content recognition and filling framework after the fourth timer reaches the fourth timing duration is a move event, the content recognition and filling framework may determine whether a distance between a touch position of the move event and a touch position of a drop event exceeds a second threshold.

If the distance between the touch position of the move event and the touch position of the drop event exceeds the second threshold, it may represent that an operation of the user is a move operation or a finger movement, and it may further represent that an operation intention of the user is not a drag intention or represent that the operation intention of the user is an intention of switching a window. In this case, the content recognition and filling framework terminates a subsequent drag-related step.

If the distance between the touch position of the move event and the touch position of the drop event does not exceed the second threshold, it may represent that the operation of the user is a touch and hold operation, and it may further represent that the real intention of the touch and hold operation is a drag intention. In this case, the content recognition and filling framework performs step S214a. The touch and hold operation means that the finger does not move or lift.

When a first event received by the content recognition and filling framework after the fourth timer reaches the fourth timing duration is a lift event, it represents that an operation of the user is a lift operation or a finger lift. In this case, the content recognition and filling framework terminates a subsequent drag-related step.

Both the move operation and the lift operation represent that the operation intention of the user is not a drag intention. When determining that the operation intention of the user is not a drag intention, the content recognition and filling framework cancels the fourth timer or terminates a subsequent drag-related step. This may reduce power consumption of the electronic device. The fourth timer may be used to accurately determine, in a scenario in which the electronic device displays a new window, whether a real intention of the touch and hold operation of the user is a drag intention, thereby improving accuracy of identifying an operation intention of the user.

It may be understood that, that the user's finger does not move may further represent that the user's finger does not lift.

Optionally, if the content recognition and filling framework determines that the user's finger moves or lifts, the content recognition and filling framework may further clear the stored picture content and the layout of the target control, and clear the third timer and the fourth timer.

S214a: When a picture exists in a memory, the content recognition and filling framework obtains a bitmap corresponding to the picture from the memory.

For example, the view entity includes picture content. The view entity reported by the target control is stored in the memory, and therefore the picture exists in the memory. The content recognition and filling framework may determine whether the view entity of the target control exists in the memory. If the view entity of the target control exists in the memory, the content recognition and filling framework may determine that the picture of the target control exists in the memory.

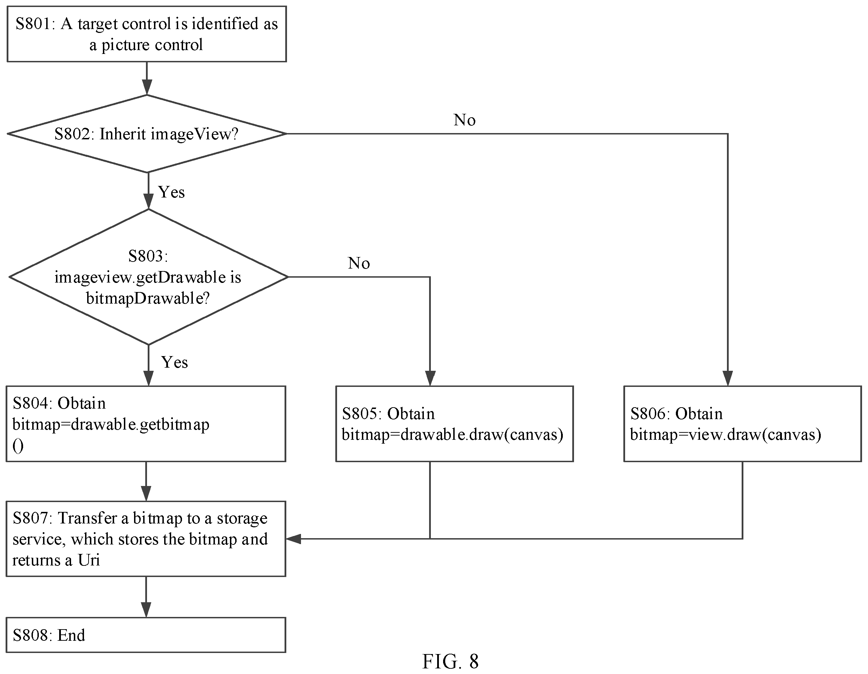

The content recognition and filling framework may obtain the bitmap corresponding to the picture of the target control from the view entity. For details about how to obtain the bitmap corresponding to the picture of the target control from the view entity, refer to the following embodiment shown in FIG. 8. For ease of understanding, the embodiment shown in FIG. 8 is described below.

S215: The content recognition and filling framework transfers the obtained bitmap to the content storage service.

For example, the content recognition and filling framework transfers the obtained bitmap to the content storage service. The content storage service stores the bitmap, so that a target sub-service subsequently obtains the bitmap from the content storage service.

The content storage service is a system service. Without authorization, other applications and services cannot obtain, from the content storage service, the bitmap stored by the content storage service. This may reduce information spread caused by obtaining of the bitmap of the target control by another unauthorized application when the electronic device performs the picture dragging method provided in this embodiment of this application, thereby improving security of storing the picture content of the target control.

S216: After storing the bitmap, the content storage service returns a universal resource identifier (universal resource identifier, Uri) of the bitmap to the content recognition and filling framework.

For example, the Uri may represent a storage path of the bitmap. The Uri may include "content://" and a path of data.

Optionally, the Uri may include "content://", the path of the data, and an identifier ID. For example, after the content storage service stores the bitmap corresponding to the picture of the target control, the content storage service returns the Uri, namely, content://aaa/bbb/ccc/ddd/123456, of the bitmap to the content recognition and filling frame. Herein, aaa/bbb/ccc/ddd may represent the path of the data. 123456 may represent the identifier ID of the target control. The identifier ID is a unique identifier allocated by the content storage service to the stored bitmap.

Optionally, S213 and S214a may be performed concurrently. In this way, the copy and storage of the picture content of the target control may be completed as soon as possible, so that a drag box is created as soon as possible.

S217: The content recognition and filling framework creates, by using the obtained bitmap, a drag box that includes a shadow and a rounded corner.

For example, the content recognition and filling framework may invoke a picture width obtaining method to obtain a picture width of the target control from the view entity of the target control. The content recognition and filling framework may invoke a picture height obtaining method to obtain a picture height of the target control from the view entity of the target control. The content recognition and filling framework may invoke a picture position obtaining method to obtain a display position of the picture from the view entity of the target control.

For example, the content recognition and filling framework may invoke an imageView.getWidth() method to obtain a picture width value of the target control, for example, int width = imageView.getWidth(), where width represents the obtained picture width value, and the picture width value is, for example, 350.

The content recognition and filling framework may invoke an imageView.getHeight() method to obtain a picture height value of the target control, for example, int height = imageView.getHeight(), where height represents the obtained picture height value, and the picture height value is, for example, 600.

The content recognition and filling framework may include a drag box creation module (drag shadow builder). The content recognition and filling framework may transmit the obtained bitmap, the obtained display position of the picture, the obtained picture width, and the obtained picture height to the drag box creation module.

The drag box creation module creates a drag box that includes a shadow and a rounded corner, by using the bitmap, the display position of the picture, the picture width, the picture height, and a preset configuration parameter in the drag box creation module. The preset configuration parameter in the drag box creation module may include a length and a width of the drag box (out shadow size), a position of a finger on the drag box (out shadow touch point), a shadow format of the drag box, a shadow color of the drag box, and a rounded corner of the drag box. The position of the finger on the drag box is related to the picture width and the picture height. For example, the position of the finger on the drag box may be obtained by the drag box creation module by calculating the picture width and the picture height.

The drag box created by the drag box creation module is, for example, a drag box 308 in the interface shown in FIG. 3C. Picture content of the drag box 308 is the same as picture content of the target control (that is, the control 306). A width-to-height ratio of the drag box 308 is the same as a ratio of the picture width to the picture height of the control 306. A drag start position of the drag box 308 is the same as the display position of the control 306. The drag box 308 further includes a shadow of the drag box and a rounded corner of the drag box. The shadow and rounded corner of the drag box 308 are, for example, a shadow of the drag box and a rounded corner of the drag box of the drag box 308 in the interface shown in FIG. 3C.

After it is determined that an intention of the touch and hold operation of the user is a drag intention, a drag box is generated. The electronic device may display the drag box, so as to prompt the user that the picture content of the target control has been copied and stored, and the user may perform dragging, so as to complete the copy and storage of the picture content of the target control when the user touches and holds the target control. This may improve user experience of dragging the picture, and further improve user experience of using the electronic device.

It may be understood that, because the picture dragging method provided in this embodiment of this application does not affect execution logic of the native system of the electronic device, the picture dragging method provided in this embodiment of this application does not affect a new window displayed by the electronic device. For example, the new window displayed by the electronic device does not disappear due to display of a drag box.

S218: The content recognition and filling framework invokes an interface of the drag framework.

For example, the content recognition and filling framework invokes the interface of the drag framework and transfers the Uri and the created drag box 308 to the interface of the drag framework, so that the drag framework controls the drag box 308 to move along with the finger, and transfers the Uri to the second application when the finger moves into a window of the second application and then lifts.

S219: The drag framework monitors the window management framework, and controls the drag box to move along with the finger.

For example, after the content recognition and filling framework invokes the interface of the drag framework, a finger movement scenario may occur. In this scenario, the drag framework monitors the window management framework, obtains a touch position of the finger in real time, and controls the drag box 308 to move along with the finger.

For example, after the content recognition and filling framework invokes the interface of the drag framework, the electronic device may display the interface shown in FIG. 3C. In the interface shown in FIG. 3C, if the user's finger moves, the electronic device may display the interface shown in FIG. 3D. It can be learned from the interfaces shown in c and FIG. 3D that, the position of the drag box 308 is the same as the touch position of the finger, so that the drag box 308 moves along with the finger. This may improve user experience of using the electronic device.

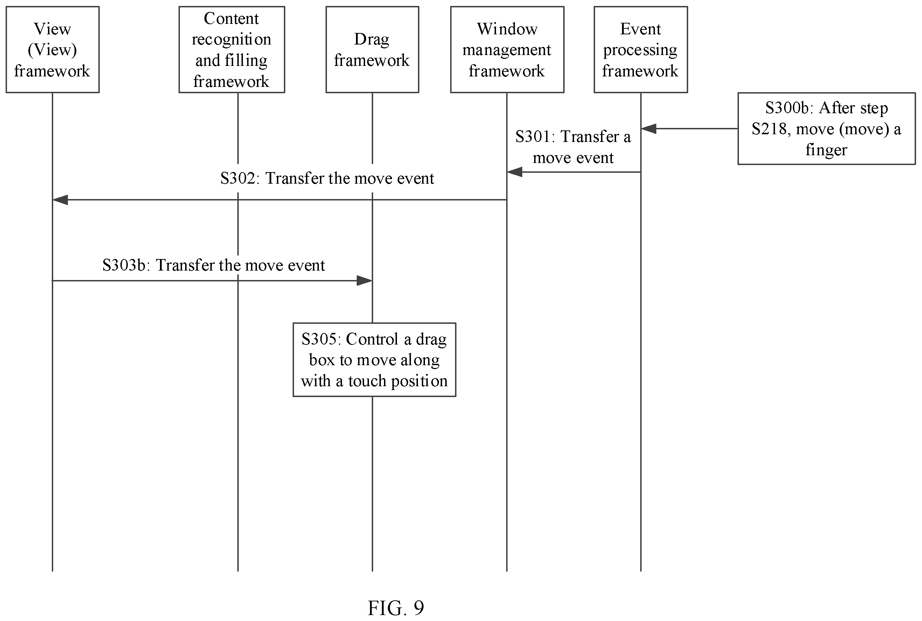

FIG. 9 below is a flowchart of module interaction in a finger movement scenario after an interface of a drag framework is invoked. For ease of understanding, a module interaction procedure shown in FIG. 9 is described below.

Optionally, after the content recognition and filling framework invokes the interface of the drag framework, a finger lifting scenario may further appear. In the finger lifting scenario, the drag framework may perform different steps based on different lifting positions. For example, if the lifting position at which the finger lifts (or a position at which the display screen is last touched) is in the sidebar, step S220 may be performed. If the position at which the finger lifts is in the window of the target page, the drag framework controls the drag box to roll back to a drag start position. The drag start position is, for example, a position at which the target control is located, or a touch and hold position.

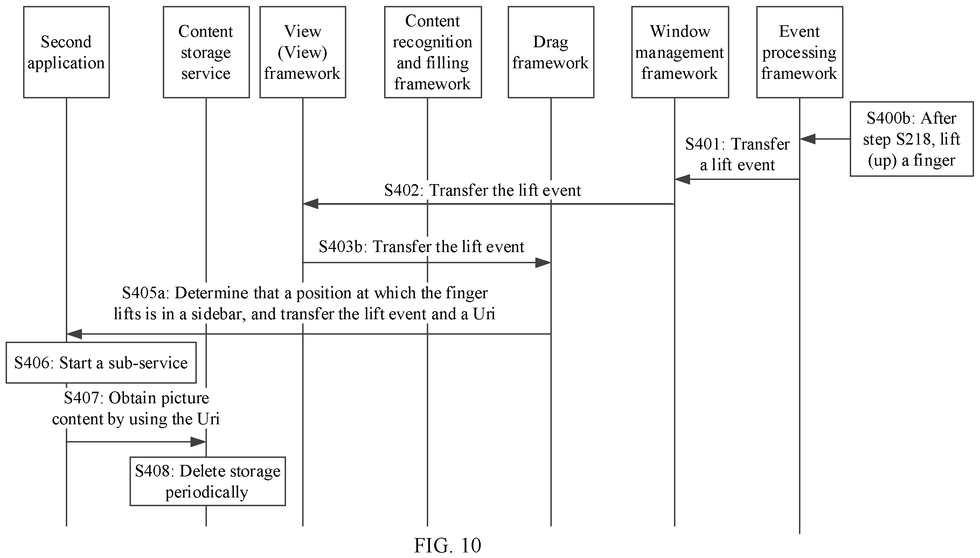

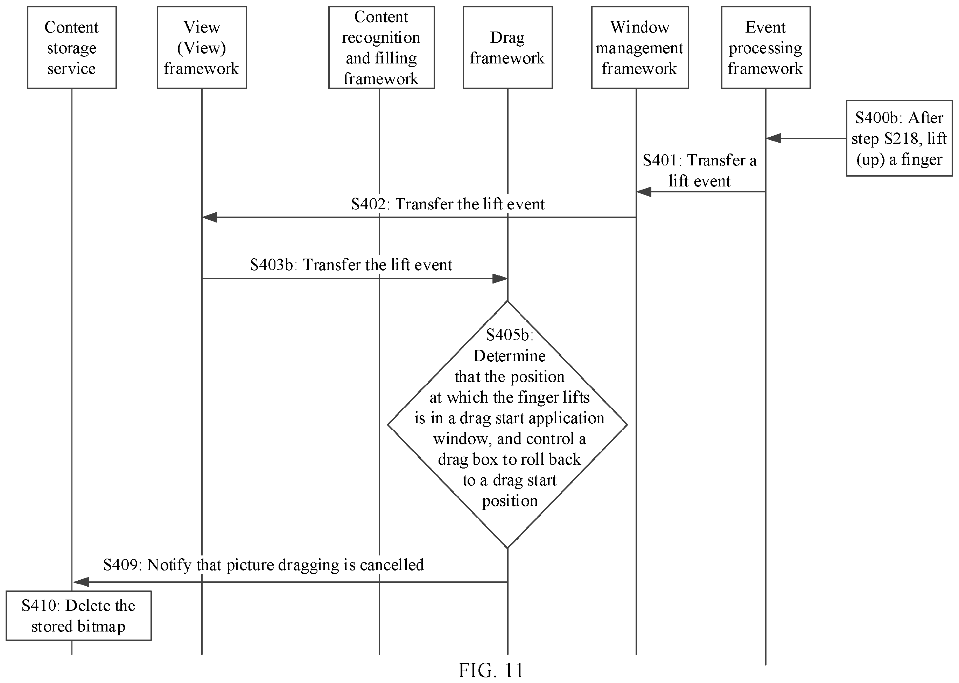

FIG. 10 below is a flowchart of module interaction in a finger lifting scenario after an interface of a drag framework is invoked. FIG. 11 below is another flowchart of module interaction in a finger lifting scenario after an interface of a drag framework is invoked. For ease of understanding, module interaction procedures shown in FIG. 10 and FIG. 11 are described below.

S220: The window management framework starts the second application, so that the second application starts the sub-service.

For example, when the finger moves to the hot zone, the window management framework starts the second application, and the display screen displays a sidebar (or a window of the second application). The sidebar is, for example, the sidebar 32 in the interface shown in FIG. 3D. The user may continue to move the finger, drag the drag box to a position above an icon of a target sub-service, and lift the finger. The second application may obtain a lift event from the drag framework. The second application may determine that a sub-service of an icon corresponding to a touch position of the lift event is the target sub-service. The second application may start the target sub-service. The second application transfers the Uri to the target sub-service. The target sub-service obtains, based on the Uri, the bitmap corresponding to the picture of the target control from the content storage service, so as to perform service processing by using the bitmap.

For example, as shown in FIG. 3A to FIG. 3H, in the interface shown in FIG. 3C, the user may move a finger. When the finger moves into the hot zone 31 of the display screen of the electronic device, the window management framework starts the second application, so that the electronic device can display the interface shown in FIG. 3D. The sidebar 32 may movably display icons of a plurality of sub-services, which helps the user drag the drag box 308 to the position above the icon of the target sub-service and then lift the finger, so that the target sub-service performs service processing by using picture content of the target control.

For example, the target sub-service is a note application. In the interface shown in FIG. 3D, the user moves the finger to drag the drag box 308 to a position above the icon 324 of the note application. The electronic device may display an interface shown in FIG. 3E.

In the interface shown in FIG. 3E, the user may lift a finger, and the electronic device may display an interface shown in FIG. 3F. When the user lifts the finger, the drag framework may determine that a touch position of a lift event is in the sidebar 32. The touch position of the lift event may represent a position at which the user's finger lifts. The drag framework transfers, to the second application, the lift event and the Uri of the bitmap corresponding to the picture of the target control. The second application identifies that the sub-service icon corresponding to the touch position of the lift event is the icon of the note application. The second application may determine that the target sub-service is the note application. The second application starts the note application. The second application transfers the Uri to the note application. The note application obtains the bitmap based on the Uri, enabling the electronic device to display a page shown in FIG. 3F, so that the user can continue to perform an operation on the page shown in FIG. 3F.

For example, the target sub-service is a service of the QQ application for sending to a QQ friend. In the interface shown in FIG. 3D, the user moves the finger to drag the drag box 308 to a position above the icon 326 of the service for sending to a QQ friend. The electronic device may display an interface shown in FIG. 3G.

In the interface shown in FIG. 3G, the user may lift a finger, and the electronic device may display an interface shown in FIG. 3H. When the user lifts the finger, the drag framework may identify that a touch position of a lift event is in the sidebar 32. The drag framework transfers the lift event and the Uri to the second application. The second application identifies that an icon corresponding to a touch position of a lift event is the icon of the service for sending to a QQ friend. The second application may determine that the target sub-service is the service for sending to a QQ friend. The second application starts the QQ application, and further starts the service for sending to a QQ friend. The second application transfers the Uri to the service for sending to a QQ friend. The service for sending to a QQ friend obtains the bitmap based on the Uri, enabling the electronic device to display a page shown in FIG. 3H, so that the user can continue to perform an operation on the page shown in FIG. 3H. In the interface shown in FIG. 3H, the user may select a friend or a group chat by tapping a friend control or a group chat control, so as to send the bitmap to the selected friend or group chat.

For the module interaction procedure in the scenario in which the user drags the drag box 308 to the position above the icon of the target sub-service and then lifts the finger, further refer to a subsequent specific description in the embodiment of FIG. 10.

According to the picture dragging method provided in this embodiment, in a scenario in which the picture control of the first application can actively report picture content, the target control reports a view entity that includes information such as a control name of the target control, picture content, a picture width, a picture length, and a position of a picture in a window. If it is determined that the reported view entity is a valid view entity, when it is accurately determined, by using the third timer and the fourth timer, that the real intention of the touch and hold operation of the user is a drag intention, or when it is accurately determined, by using the third timer, that the real intention of the touch and hold operation of the user is a drag intention, the bitmap corresponding to the picture of the target control is obtained from the view entity and stored, thereby completing copy and secure storage of the picture content of the target control when the user touches and holds the target control, without a need to tap the picture of the target control twice to copy and store the picture of the target control. According to the picture dragging method provided in this embodiment, a drag box is further generated by using the obtained bitmap, the picture width, the picture length, and the position of the picture in the window. The drag box is displayed to prompt the user that the picture content of the target control has been copied and stored, so that the user can perform dragging. The drag framework is used to control the drag box to move along with a finger, thereby dragging the picture of the target control. When the drag box is dragged to a position above the icon of the target sub-service, the second application starts the target sub-service, so that the target sub-service is enabled without requiring the user to perform an enable operation on the target sub-service. The second application obtains the Uri of the bitmap from the drag framework, and transfers the Uri to the target sub-service, so that the target sub-service obtains the picture content of the target control based on the Uri, so as to perform service processing in a timely manner. In this way, when the picture dragging method is compatible with logic of the native system, the picture content is quickly transferred between the first application and the target sub-service, the second application can quickly transfer the first sub-service, thereby improving user experience of using the electronic device.

The foregoing describes the module interaction procedure in the scenario in which the picture control of the first application can actively report the picture content. The following describes a module interaction procedure in a scenario in which the picture control of the first application cannot actively report the picture content.

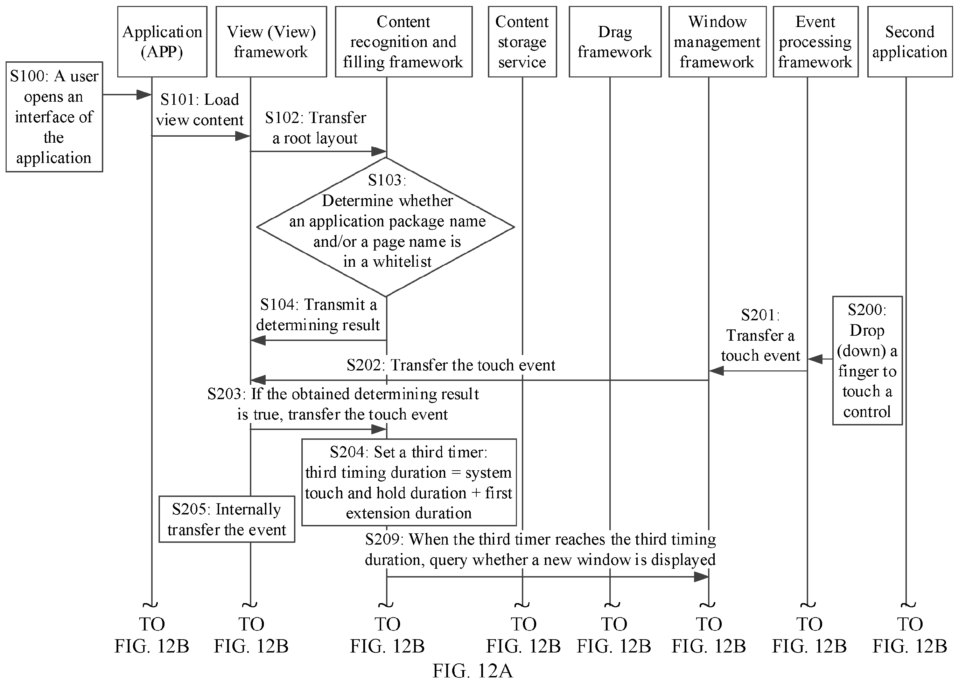

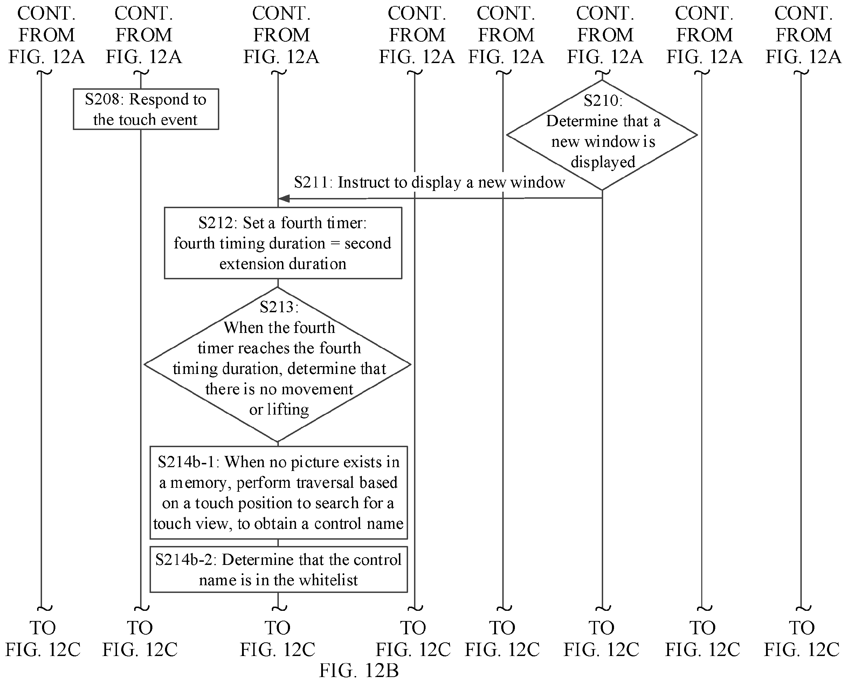

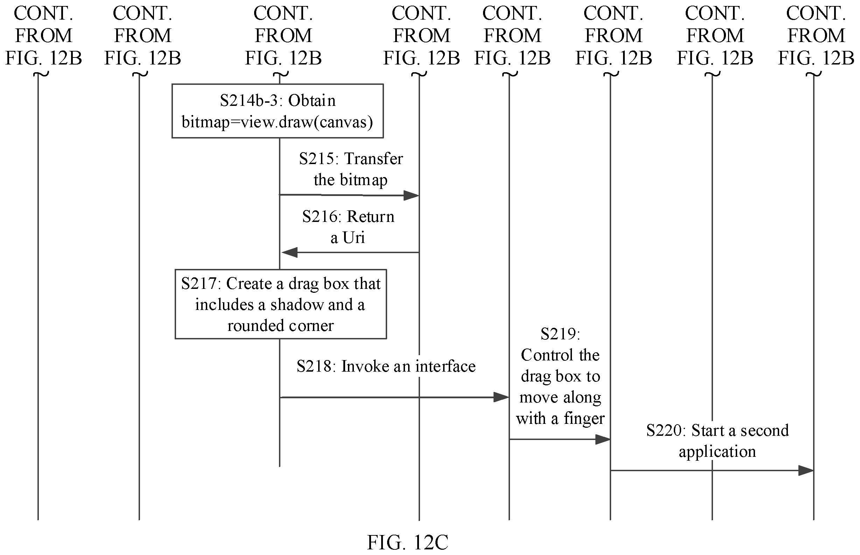

For the scenario in which the picture control of the first application cannot actively report the picture content, FIG. 12A to FIG. 12C are other flowcharts of module interaction according to an embodiment of this application.

FIG. 12A to FIG. 12C differ from FIG. 4A to FIG. 4C in that FIG. 12A to FIG. 12C do not include steps S206, S207, and S214a in the embodiment of FIG. 4A to FIG. 4C, and FIG. 12A to FIG. 12C further include steps S214b-1, S214b-2, and S214b-3. Steps S206, S207, and S214a may represent a manner of obtaining the picture content by the content recognition and filling framework in the scenario in which the target control supports reporting of the picture content. Steps S214b-1, S214b-2, and S214b-3 may represent a manner of obtaining the picture content by the content recognition and filling framework in the scenario in which the target control does not support reporting of the picture content. Remaining steps in FIG. 12A to FIG. 12C are similar to corresponding steps in the embodiment of FIG. 4A to FIG. 4C. For similar steps, details are not described in this embodiment.

As shown in FIG. 12A to FIG. 12C, the picture dragging method provided in this embodiment of this application includes:
S100: A user opens an interface of a first application.
S101: An application (APP) loads content of each view on a target page to a view framework.
S102: The view framework transfers a root layout of the target page to a content recognition and filling framework.
S103: The content recognition and filling framework determines whether an application package name and/or a page name of the target page is in a whitelist.
S104: The content recognition and filling framework transmits a determining result to the view framework.
S200: An event processing framework obtains a touch event indicating that a target control is touched.
S201: The event processing framework transfers the touch event to a window management framework.
S202: The window management framework transfers the touch event to the view framework.
S203: If the view framework receives a positive determining result transmitted by the content recognition and filling framework, the view framework transfers the touch event to the content recognition and filling framework.
S204: The content recognition and filling framework sets a third timer in response to a drop event.
S205: The touch event is internally transferred in the view framework.
Optionally, steps S203 and S205 may be performed concurrently.
S208: The view framework responds to the touch event.
S209: The third timer reaches third timing duration, and the content recognition and filling framework queries, from the window management framework, whether a new window is displayed at a position of the target control.
S210: The window management framework determines that a new window is displayed around the target control.
S211: The window management framework notifies the content recognition and filling framework to display a new window.
S212: The content recognition and filling framework sets a fourth timer. Fourth timing duration of the fourth timer is equal to second extension duration.
S213: The fourth timer reaches the fourth timing duration, and the content recognition and filling framework determines that the user's finger does not move or lift.
S214b-1: No picture exists in a memory, and the content recognition and filling framework performs traversal, in a root layout based on a touch position of the drop event, to search for a control corresponding to the touch position, to obtain a control name.

For example, because the target control is a control in the non-inherited ImageView format, when the target control receives the drop event, the target control cannot report the view entity of the target control to the content recognition and filling framework. Therefore, the view entity does not exist in the memory.

If the content recognition and filling framework determines that the view entity of the target control does not exist in the memory, it is determined that the picture of the target control does not exist in the memory. The content recognition and filling framework may perform traversal, in the root layout, to search for a control corresponding to the touch position of the drop event, to obtain a control name of the found control. The found control is the target control.

Optionally, no picture exists in the memory, and the content recognition and filling framework may further perform traversal in the root layout to search for a control corresponding to a touch position of a latest received move event.

Optionally, S213 and S214b-1 may be performed concurrently. In this way, the copy and storage of the picture content of the target control may be completed as soon as possible, so that a drag box is created as soon as possible.

S214b-2: The content recognition and filling framework determines that the control name of the found control is in the whitelist.

For example, the content recognition and filling framework may determine whether the control name of the found control is in the whitelist.

If the control name of the found control is in the whitelist, the content recognition and filling framework performs step S214b-3.

If the control name of the found control is not in the whitelist, the content recognition and filling framework does not perform a subsequent drag-related step, and the content recognition and filling framework may clear the third timer, the fourth timer, and the obtained event.

S214b-3: The content recognition and filling framework obtains the bitmap corresponding to the picture of the target control from the view entity corresponding to the found control.

It may be understood that the root layout is a part of the view framework. The content recognition and filling framework finds the target control from the root layout, which means that the content recognition and filling framework finds the view entity of the target control from the view framework, and the content recognition and filling framework may obtain the bitmap corresponding to the target control from the view entity of the target control.

For the bitmap corresponding to the target control obtained by the content recognition and filling framework from the view entity of the target control, refer to a subsequent embodiment shown in FIG. 8. For ease of understanding, the embodiment shown in FIG. 8 is described in detail below.
S215: The content recognition and filling framework transfers the obtained bitmap to a content storage service.
S216: After storing the bitmap, the content storage service returns a universal resource identifier (Uri) of the bitmap to the content recognition and filling framework.
S217: The content recognition and filling framework creates, by using the obtained bitmap, a drag box that includes a shadow and a rounded corner.
S218: The content recognition and filling framework invokes an interface of the drag framework.
S219: The drag framework monitors the window management framework, and controls the drag box to move along with the finger.
S220: The window management framework starts the second application, so that the second application starts a sub-service.

According to the picture dragging method provided in this embodiment, in a scenario in which the picture control of the first application cannot actively report picture content, when it is accurately determined, by using the third timer and the fourth timer, that the real intention of the touch and hold operation of the user is a drag intention, or when it is accurately determined, by using the third timer, that the real intention of the touch and hold operation of the user is a drag intention, the root layout is traversed to search for the control (that is, the target control) corresponding to the touch position of the drop event, or the root layout is traversed to search for the control (that is, the target control) corresponding to the touch position of the latest received move event, that is, the view entity of the target control is found from the view framework. If it is determined that a control name of the found control is in the whitelist, the bitmap corresponding to the picture of the target control may be obtained from the view entity of the target control and stored, thereby completing copy and secure storage of the picture content of the target control when the user touches and holds the target control, without a need to tap the picture of the target control twice to copy and store the picture of the target control. According to the picture dragging method provided in this embodiment, a drag box is further generated by using the bitmap, the picture width, the picture length, and the position of the picture in the window. The drag box is displayed to prompt the user that the picture content of the target control has been copied and stored, so that the user can perform dragging. The drag framework is used to control the drag box to move along with a finger, thereby dragging the picture of the target control. When the drag box is dragged to a position above the icon of the target sub-service, the second application starts the target sub-service, so that the target sub-service is enabled without requiring the user to perform an enable operation on the target sub-service. The second application obtains the Uri of the bitmap from the drag framework, and transfers the Uri to the target sub-service, so that the target sub-service obtains the picture content of the target control based on the Uri, so as to perform service processing in a timely manner. In this way, when the picture dragging method is compatible with logic of the native system, the picture content is quickly transferred between the first application and the target sub-service, the second application can quickly transfer the first sub-service, thereby improving user experience of using the electronic device.

With reference to FIG. 8, the following describes the bitmap corresponding to the target control obtained from the view entity of the target control. FIG. 8 is a schematic flowchart of obtaining a bitmap according to an embodiment of this application.

As shown in FIG. 8, if the format of the target control is the inherited ImageView format, the content recognition and filling framework may perform steps S801-S804 to obtain the bitmap corresponding to the picture of the target control from the view entity in the memory, and the content recognition and filling framework may alternatively perform steps S801, S802, S803, and S805 to obtain the bitmap corresponding to the picture of the target control from the view entity in the memory. If the format of the target control is the non-inherited ImageView format, the content recognition and filling framework may perform steps S801, S802, and S806 to obtain the bitmap corresponding to the picture of the target control from the view entity of the target control in the view framework.

S801: A content recognition and filling framework identifies that the target control is a picture control.

For example, the content recognition and filling framework finds a control type (type) corresponding to a control name of the target control from a whitelist. For example, the control name of the target control is activitya_viewb. The content recognition and filling framework finds, from the whitelist, that a type of the control with a control name of activitya_viewb is image. The content recognition and filling framework identifies that the type of the target control is a picture type, that is, the content recognition and filling framework identifies that the target control is a picture control. The content recognition and filling framework may perform step S802.

S802: The content recognition and filling framework determines whether the format of the target control is the inherited ImageView format.

For example, the content recognition and filling framework may invoke an inherited ImageView check method to determine whether the format of the target control is the inherited Image View format.

For example, the inherited ImageView check method may be a view instanceof ImageView method. If the content recognition and filling framework invokes the view instanceof ImageView method to obtain a result true, the content recognition and filling framework determines that the format of the target control is the inherited ImageView format. If the content recognition and filling framework invokes the view instanceof ImageView method to obtain a result false, the content recognition and filling framework determines that the format of the target control is not the inherited Image View format, or the content recognition and filling framework determines that the format of the target control is the non-inherited ImageView format.

If it is determined that the format of the target control is the inherited ImageView format, the content recognition and filling framework performs step S803.

If it is determined that the format of the target control is not the inherited ImageView format, the content recognition and filling framework performs step S806.

S803: The content recognition and filling framework determines whether a drawable object (drawable) of the target control is a drawable object in the bitmap format.

For example, the view entity reported by the target control includes the drawable object (drawable). The drawable object includes picture content of the target control.

The content recognition and filling framework may invoke a method for obtaining a drawable object format to determine whether a format of the drawable object in the view entity is a drawable object in a bitmap format.

For example, the content recognition and filling framework invokes the imageview.getDrawable() method.

If the obtained result is bitmapDrawable, the content recognition and filling framework determines that the drawable object of the target control is the drawable object in the bitmap format, and the content recognition and filling framework may perform step S804.

If the obtained result is not bitmapDrawable, the content recognition and filling framework determines that the drawable object of the target control is not the drawable object in the bitmap format, and the content recognition and filling framework may perform step S805.

S804: The content recognition and filling framework invokes a first bitmap obtaining method to obtain the bitmap corresponding to the picture of the target control from the view entity.

For example, the first bitmap obtaining method is a drawable.getbitmap() method.

When the content recognition and filling framework determines in step S803 that the format of the drawable object in the view entity is the bitmap format, the content recognition and filling framework invokes the drawable.getbitmap() method to obtain the drawable object in the bitmap format from the view entity uploaded by the target control. The obtained bitmap-type drawable object is the bitmap of the picture corresponding to the target control. For example, bitmap=drawable.getbitmap() is obtained.

S805: The content recognition and filling framework invokes a second bitmap obtaining method to obtain the bitmap corresponding to the picture of the target control from the view entity.

For example, the second bitmap obtaining method is a drawable.draw(canvas) method.

When the content recognition and filling framework determines in step S803 that the format of the drawable object in the view entity is not the bitmap format, the content recognition and filling framework may control the target control to invoke the drawable.draw(canvas) method. The view entity of the target control may extract the drawable, and draw the extracted drawable by using a canvas (canvas) parameter provided by the drawable.draw(canvas) method, to obtain the bitmap corresponding to the drawable. The canvas (canvas) parameter is used to specify a target canvas for drawing. The target canvas specified by the canvas (canvas) parameter provided by the drawable.draw(canvas) method is a canvas specially used to draw the drawable. The bitmap corresponding to the drawable, that is, the bitmap corresponding to the picture of the target control, may alternatively represent content of the drawing object on the canvas. The target control transfers the bitmap drawn by the view entity to the content recognition and filling framework. For example, bitmap=drawable.draw(canvas) is obtained.

S806: The content recognition and filling framework invokes a third bitmap obtaining method to obtain the bitmap corresponding to the picture of the target control from the view entity.

For example, the third bitmap obtaining method is a view.draw(canvas) method.

If the format of the target control is not the inherited ImageView format, regardless of whether the view entity of the target control includes a drawable object (drawable), the view entity cannot separately extract the drawable object (drawable), and therefore cannot obtain the bitmap corresponding to the picture of the target control by using the second bitmap obtaining method. The view entity of the target control includes a display region resource of the target control. The display region resource of the target control may include the picture content of the target control, and the display region resource of the target control may further include a blank region in the display region of the target control.

When the content recognition and filling framework determines in step S802 that the format of the target control is not the inherited ImageView format, the content recognition and filling framework may control the target control to invoke the view.draw(canvas) method. The view entity of the target control extracts the display region resource of the target control, and draws the extracted display region resource by using the canvas parameter provided by the view.draw(canvas) method, to obtain the bitmap corresponding to the display region resource. The target canvas specified by the canvas parameter provided by the view.draw(canvas) method is a canvas specially used to draw the display region resource. The bitmap corresponding to the display region resource is the bitmap corresponding to the picture of the target control. The target control transfers the bitmap corresponding to the display region resource to the content recognition and filling framework. For example, bitmap=view.draw(canvas) is obtained.

If the display region resource of the target control includes the picture content of the target control and does not include a blank region, the content recognition and filling framework invokes the third bitmap obtaining method to obtain the bitmap corresponding to the picture of the target control from the view entity, where the bitmap includes the picture content of the target control and does not include the blank region.

If the display region resource of the target control includes the picture content of the target control and the blank region, the content recognition and filling framework invokes the third bitmap obtaining method to obtain the bitmap corresponding to the picture of the target control from the view entity, where the bitmap includes the picture content of the target control and the blank region.

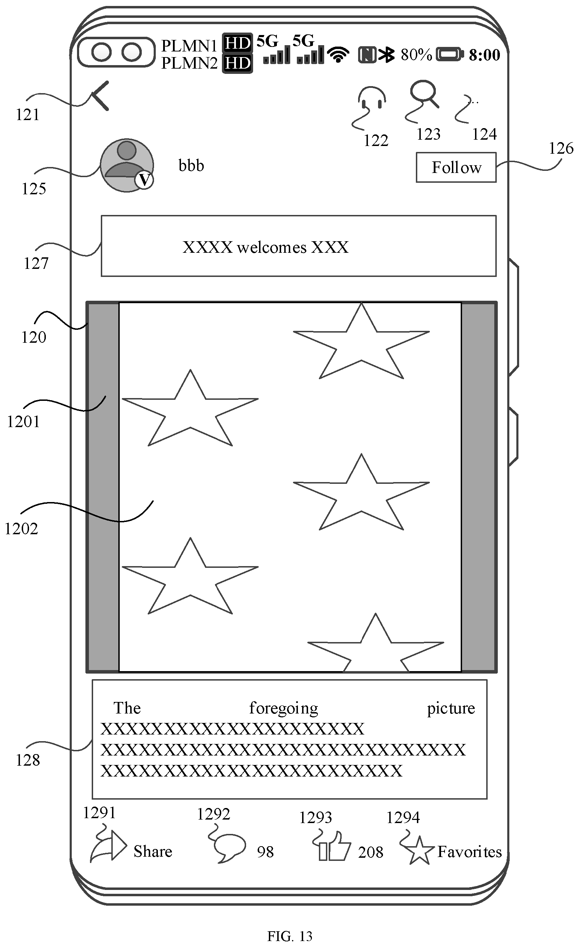

For example, the first application is the Toutiao application, a picture control on a page in the Toutiao application is a target control, and a format of the target control is not the inherited ImageView format. FIG. 13 is a schematic diagram of a display interface of the Toutiao application.

The interface shown in FIG. 13 includes a control 131 that represents a return, a control 132 that represents voice playback, a control 133 that represents a search, a control 134 that represents more, an icon 135 that represents a blogger, a follow control 136, a text control 137, a target control 130, a text control 138, a share control 1391, a message control 1392, a like control 1393, and a favorites control 1394. The target control 130 includes a blank region 1301 in a display region of the target control and picture content 1302 of the target control. Both the blank region 1301 and the picture content 1302 are display region resources of the target control 130.

Because the format of the target control 130 is not the inherited ImageView format, the content recognition and filling framework invokes the third bitmap obtaining method to obtain the bitmap from the view entity of the target control, where the bitmap not only includes the picture content 1302, but also includes the blank region 1301.

It may be understood that the content recognition and filling framework invokes the first bitmap obtaining method or the second bitmap obtaining method to obtain the bitmap, where the bitmap includes the picture content of the target control, and does not include the blank region. However, the content recognition and filling framework invokes the third bitmap obtaining method to obtain the bitmap from the view entity, where the bitmap may include the picture content of the target control, and may further include the blank region.

S807: The content recognition and filling framework transfers the obtained bitmap to the content storage service, and the content storage service returns a Uri of the bitmap to the content recognition and filling framework.

Specific implementation principles and technical effects of this step are similar to specific implementation principles and technical effects of steps S215-S216 in the embodiment of FIG. 4A to FIG. 4C, and are also similar to specific implementation principles and technical effects of steps S215-S216 in the embodiment of FIG. 12A to FIG. 12C. Details are not described herein again.

S808: The procedure of obtaining the bitmap by the content recognition and filling framework ends.

For ease of understanding, the following separately describes FIG. 5, FIG. 6, FIG. 9, FIG. 10, and FIG. 11.

FIG. 5 is a flowchart of module interaction in a finger movement scenario before a third timer exceeds third timing duration according to an embodiment of this application. As shown in FIG. 5, the picture dragging method provided in this embodiment of this application may further include the following steps.

S300a: After step S204 and before step S209, an event processing framework receives a move event.

S301: The event processing framework transfers the move event to a window management framework.

S302: The window management framework transfers the move event to a view framework.

S303a: The view framework transfers the move event to a content recognition and filling framework.

S304: The content recognition and filling framework determines whether a distance between a touch position of the move event and a touch position of a drop event is greater than a second threshold; if the distance is less than or equal to the second threshold, no processing is performed; or if the distance is greater than the second threshold, the third timer is cancelled.

For example, the distance between the touch position of the move event and the touch position of the drop event may be referred to as a moving distance. The second threshold may be 10 pixels.

The moving distance being less than or equal to the second threshold may represent that the operation of the user is a touch and hold operation. In this case, the third timer does not expire, and therefore, the content recognition and filling framework performs no processing.

The moving distance being greater than the second threshold may represent that an intention of the user is another intention, not a drag intention. The another intention may include an intention of switching a page. The content recognition and filling framework may cancel the third timer, thereby terminating a subsequent drag-related step. The content recognition and filling framework may further clear the obtained picture content and the obtained touch event.

It may be understood that after step S204 and before step S209, the user's finger does not leave the display screen and the finger moves. Each time the electronic device generates one move event, steps shown in the embodiment of FIG. 5 may be performed once.

It may be understood that, before a fourth timer exceeds fourth timing duration, if a finger moves, a module interaction procedure in this scenario is similar to the module interaction procedure shown in FIG. 5, and details are not described again.

According to the picture dragging method provided in this embodiment, after the content recognition and filling framework sets a timer, and before the set timer expires, if the user's finger moves, the content recognition and filling framework obtains a moving distance by comparing a touch position of a move event with a touch position of a drop event. If the moving distance is less than or equal to a second threshold, it may be determined that an operation intention of the user may be a drag intention. In this case, the content recognition and filling framework may perform no processing. If the moving distance is greater than the second threshold, it may be determined that the operation intention of the user is not a drag intention. In this case, the content recognition and filling framework may cancel the set timer, thereby terminating a subsequent drag-related action. In this way, the operation intention of the user may be accurately determined by comparing the moving distance with the second threshold. Based on a comparison result between the moving distance and the second threshold, the electronic device performs no processing or terminates a subsequent drag-related action, thereby reducing power consumption of the electronic device due to invalid dragging, and further improving user experience of using the electronic device.

FIG. 6 is a flowchart of module interaction in a finger lifting scenario before a third timer exceeds third timing duration according to an embodiment of this application. As shown in FIG. 6, the picture dragging method provided in this embodiment of this application may further include the following steps.

S400a: After step S204 and before step S209, an event processing framework receives a lift event.

S401: The event processing framework transfers the lift event to a window management framework.

S402: The window management framework transfers the lift event to a control framework.

S403a: The control framework transfers the lift event to a content recognition and filling framework.

S404: The content recognition and filling framework cancels a third timer.

Lifting the finger before the third timer exceeds third timing duration may represent that the intention of the user is not a drag intention. In this case, the content recognition and filling framework may cancel the third timer, and terminate a subsequent drag-related step, thereby reducing power consumption of the electronic device due to invalid dragging.

It may be understood that, before a fourth timer exceeds fourth timing duration, if a finger lifts, a module interaction procedure in this scenario is similar to the module interaction procedure shown in FIG. 6, and details are not described again.

According to the picture dragging method provided in this embodiment, after the content recognition and filling framework sets a timer, and before the set timer expires, if the user's finger lifts, the content recognition and filling framework may determine that an operation intention of the user is not a drag intention. In this case, the content recognition and filling framework may cancel the timer, so that the electronic device terminates a subsequent drag-related step, thereby reducing power consumption of the electronic device due to invalid dragging, and improving user experience of using the electronic device.

FIG. 9 is a flowchart of module interaction in a finger movement scenario after an interface of a drag framework is invoked in an embodiment of this application. As shown in FIG. 9, the picture dragging method provided in this embodiment of this application further includes:
S300b: After step S218, an event processing framework receives a move event.
S301: The event processing framework transfers the move event to a window management framework.
S302: The window management framework transfers the move event to a view framework.
S303b: The view framework transfers the move event to a drag framework.
S305: The drag framework controls a drag box to move along with a touch position.

In a process in which the finger does not leave the display screen and moves on the display screen, the drag framework continuously receives, by using steps S301, S302, and S303b, a move event transferred by the event processing framework at a fixed sampling frequency. The drag framework may control the drag box to move along with the touch position. For a specific implementation and a technical effect of moving the drag box along with the touch position, refer to step S219 in the embodiment of FIG. 4A to FIG. 4C. Details are not described herein again in this embodiment.

According to the picture dragging method provided in this embodiment, in a scenario in which a finger moves after an interface of the drag framework is invoked, the drag framework controls the drag box to move along with the touch position, thereby improving intuitive feeling of the user about flexible dragging and movement of the drag box. The user may flexibly move the drag box to a position above an icon of a target sub-service in the sidebar, so that the target sub-service performs service processing in a timely manner by using picture content of a target control. This may improve user experience of using the electronic device.

FIG. 10 is a flowchart of module interaction in a finger lifting scenario after an interface of a drag framework is invoked in an embodiment of this application. As shown in FIG. 10, the picture dragging method provided in this embodiment of this application further includes:
S400b: After step S218, the event processing framework receives a lift event indicating that the user's finger lifts.

For example, after step S218, if the second application is started, the electronic device displays the sidebar. When the user's finger moves to a position above the icon of the target sub-service in the sidebar, the finger lifts. The event processing framework receives a lift event.

S401: The event processing framework transfers the lift event to a window management framework.

S402: The window management framework transfers the lift event to a view framework.

S403b: The view framework transfers the lift event to the drag framework.

S405a: When determining that a position at which the finger lifts is in the sidebar (or a window of the second application), the drag framework transfers the lift event and a Uri to the second application.

For example, a touch position in the lift event represents a position at which the display screen is last touched (or the position at which the user's finger lifts). The drag framework may determine whether the touch position of the lift event is in the sidebar. If the touch position of the lift event is in the sidebar, the drag framework transfers the lift event and the Uri to the second application. If the touch position of the lift event is not in the sidebar, the drag framework may control the drag box to roll back to a drag start position. For details, refer to subsequent step S405b in the embodiment of FIG. 11.

S406: The second application starts the target sub-service.

For example, that the position at which the finger lifts is in the sidebar (or the window of the second application) may include that the position at which the finger lifts is above the sub-service icon in the sidebar. The second application may identify a sub-service icon corresponding to the touch position of the lift event. The second application determines that a sub-service corresponding to the identified sub-service icon is the target sub-service. The second application starts the target sub-service, and transfers the Uri to the target sub-service.

S407: The target sub-service obtains the picture content of the target control from the content storage service by using the Uri.

The target sub-service obtains the bitmap from the content storage service based on the Uri, and the obtained bitmap includes the picture content of the target control.

The target sub-service performs service processing by using the bitmap.

For a specific implementation of step S405a-step S407, refer to step S220 in the embodiment of FIG. 4A to FIG. 4C. Details are not described herein again.

S408: The content storage service periodically deletes the stored picture content.

For example, when the content storage service transfers (or returns) the Uri to the content recognition and filling framework, the content storage service sets a first timer, and timing duration of the first timer is first timing duration.

When the first timer reaches the first timing duration, the content storage service deletes the bitmap corresponding to the stored Uri, so as to provide sufficient storage space for storing picture content next time.

According to the picture dragging method provided in this embodiment, in a scenario in which the position at which the finger lifts is above the icon of the target sub-service after an interface of the drag framework is invoked, by determining that the position at which the finger lifts is above the icon of the target sub-service, and transferring the Uri to the target sub-service, accuracy of identifying the operation intention of the user may be improved, so that the target sub-service obtains the picture content of the target control based on the Uri and performs service processing in a timely manner, thereby improving user experience of using the electronic device.

FIG. 11 is a flowchart of module interaction in a scenario in which a position at which a finger lifts is above a window of a target page after an interface of a drag framework is invoked in an embodiment of this application. As shown in FIG. 11, the picture dragging method provided in this embodiment of this application further includes:
S400b: After step S216, the event processing framework receives a lift event.
S401: The event processing framework transfers the lift event to a window management framework.
S402: The window management framework transfers the lift event to a view framework.
S403b: The view framework transfers the lift event to the drag framework.
S405b: The drag framework determines that the position at which the finger lifts is in a window of a drag start application (that is, the first application), and controls the drag box to roll back to a drag start position.

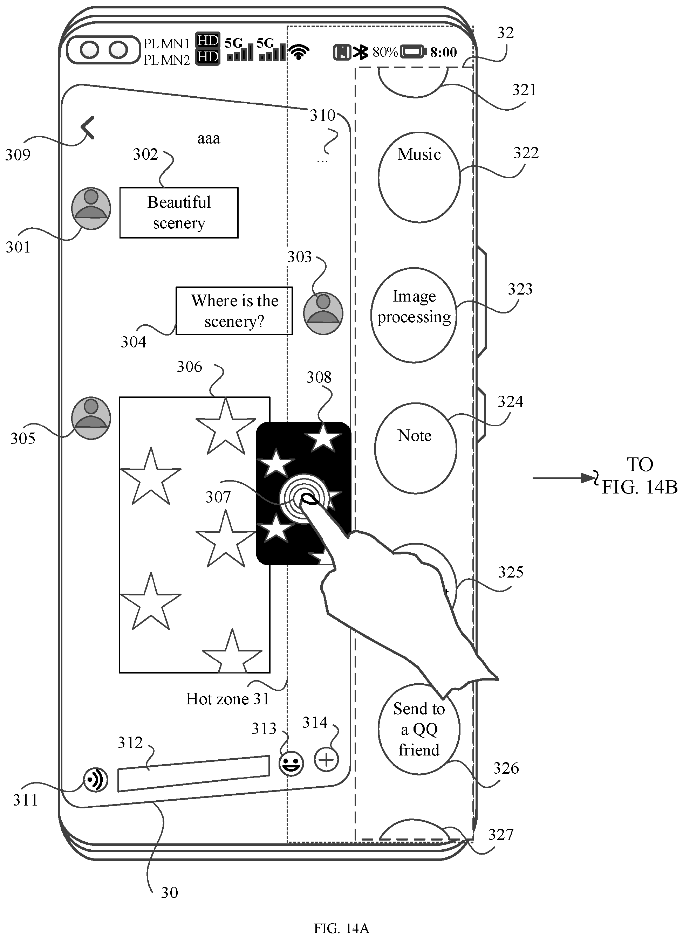

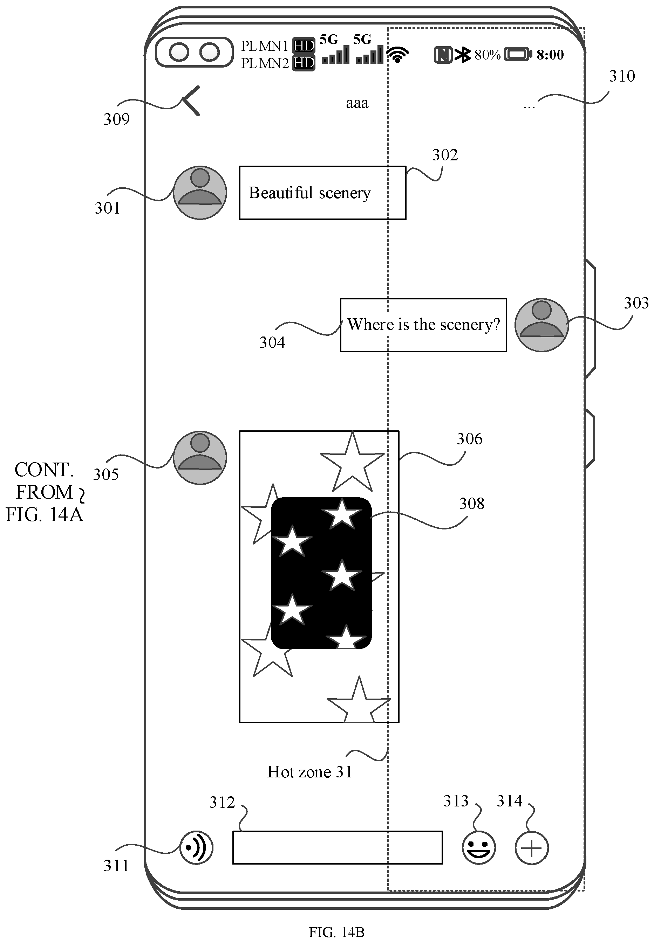

For example, FIG. 14A and FIG. 14B are scenario diagrams of finger lifting after an interface of a drag framework is invoked. After step S218, if the user's finger moves to a hot zone, the sidebar is started, and the electronic device may display the interface shown in FIG. 14A. For content in the interface shown in FIG. 14A, refer to the content in the interface shown in FIG. 3D. Details are not described herein again.

In the interface shown in FIG. 14A, if the user lifts the finger when a touch position of the finger is in a page window 30 of the first application, the electronic device may display the interface shown in FIG. 14B. The interface shown in FIG. 14B includes a control 301, a control 302, a control 303, a control 304, a control 305, a control 306, a drag box 308, a control 309, a text "aaa", a control 310, a control 311, an input box 312, a control 313, and a control 314. Because the finger leaves the display screen and the finger leaves the hot zone 31 (the hot zone 31 is invisible), the sidebar 32 disappears. Therefore, the interface shown in FIG. 14B does not include the sidebar 32, and does not include a touch and hold feedback 307, either. In the interface shown in FIG. 14B, a position of the drag box 308 is consistent with the position of the control 306.

It can be learned from the interfaces shown in a and FIG. 14B that, after step S218, if the user's finger lifts from a position above the page window 30, it represents that the position at which the finger lifts is in the window of the drag start application. In this case, the drag framework may control the drag box 308 to roll back to a drag start position, where the drag start position is the position of the control 306. In the interface shown in FIG. 14A, if the finger lifts, the finger leaves the hot zone. Therefore, the sidebar disappears, and the electronic device displays only the page window 30 of the target page shown in FIG. 14B.

S409: The drag framework notifies the content storage service that picture dragging is cancelled.

S410: The content storage service deletes the stored bitmap.

According to the picture dragging method provided in this embodiment, in a scenario in which the position at which the finger lifts is in a window of a drag start application (that is, the first application) after an interface of a drag framework is invoked, if it is determined that the lifting position is in the window of the drag start application, it may be determined that dragging performed by the user is canceled. In this case, the drag framework controls the drag box to roll back to the drag start position, and the drag framework notifies the content storage service to delete the stored bitmap, so as to provide sufficient storage space for storing a picture next time.

Optionally, the whitelist in this embodiment of this application may be built-in to a system of the electronic device, or may be obtained by the electronic device from a server.

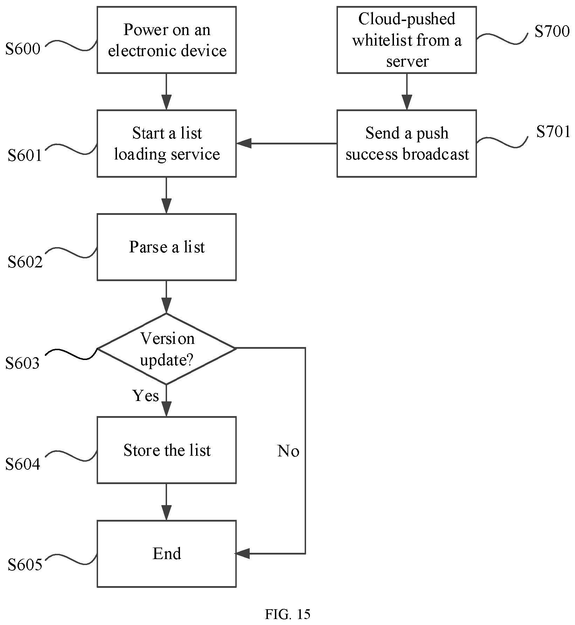

FIG. 15 is a schematic flowchart of storing a whitelist by an electronic device. As shown in FIG. 15, the procedure includes:
S600: Power on the electronic device.
S601: The electronic device starts a list loading service.

For example, the electronic device obtains the built-in whitelist built-in to the system, and/or the electronic device obtains a cloud-pushed whitelist from a server.

For example, the built-in whitelist may include a first whitelist identifier, a first whitelist version, and first whitelist content. The first whitelist content includes a plurality of application package names that support system drag, a plurality of page names that support system drag, and a plurality of control names that support system drag. The cloud-pushed whitelist may include a second whitelist identifier, a second whitelist version, and second whitelist content. The second whitelist content includes a plurality of application package names that support system drag, a plurality of page names that support system drag, and a plurality of control names that support system drag.

S602: The electronic device parses the obtained whitelist.

For example, a format of the built-in whitelist may be an xml format or a non-xml format. If the format of the built-in whitelist is the non-xml format, the electronic device converts the format of the obtained built-in whitelist into the xml format. The electronic device may read the first whitelist identifier, the first whitelist version, and the first whitelist content from the built-in whitelist in the xml format.

To reduce an amount of transferred data when the server transfers the cloud-pushed whitelist to the electronic device, the format of the cloud-pushed whitelist obtained by the electronic device may be a non-xml format. Therefore, the electronic device converts the format of the obtained cloud-pushed whitelist into the xml format. The electronic device may read the second whitelist identifier, the second whitelist version, and the second whitelist content from the cloud-pushed whitelist in the xml format.

S603: The electronic device determines whether the obtained whitelist is updated.

For example, if the electronic device obtains the built-in whitelist and the cloud-pushed whitelist in step S601, the electronic device may determine whether the cloud-pushed whitelist is updated in comparison with the built-in whitelist.

For example, the electronic device determines whether the first whitelist identifier is the same as the second whitelist identifier.

If the first whitelist identifier is the same as the second whitelist identifier, the electronic device determines whether the first whitelist version is the same as the second whitelist version.

If the first whitelist version is different from the second whitelist version, the electronic device determines that the cloud-pushed whitelist is updated in comparison with the built-in whitelist, and the electronic device may successively perform S604 and S605.

If the first whitelist version is the same as the second whitelist version, the electronic device determines that the cloud-pushed whitelist is not updated in comparison with the built-in whitelist, and the electronic device may perform S605.

For example, if the electronic device obtains the built-in whitelist in step S601, the electronic device determines whether the whitelist exists in the memory.

If the whitelist does not exist in the memory, the electronic device performs step S604.

If the whitelist exists in the memory, the electronic device determines whether the built-in whitelist is updated in comparison with the whitelist in the memory. If the built-in whitelist is not updated, step S605 is performed.

For example, if the electronic device obtains the cloud-pushed whitelist in step S601, the electronic device determines whether the whitelist exists in the memory.

If the whitelist does not exist in the memory, the electronic device performs step S604.

If the whitelist exists in the memory, the electronic device determines whether the cloud-pushed whitelist is updated in comparison with the whitelist in the memory. If the cloud-pushed whitelist is updated, step S604 is performed. If the cloud-pushed whitelist is not updated, step S605 is performed.

It may be understood that a method for determining, by the electronic device, whether the built-in whitelist is updated in comparison with the whitelist in the memory is similar to a method for determining, by the electronic device, whether the cloud-pushed whitelist is updated in comparison with the built-in whitelist, and details are not described again. A method for determining, by the electronic device, whether the cloud-pushed whitelist is updated in comparison with the whitelist in the memory is similar to the method for determining, by the electronic device, whether the cloud-pushed whitelist is updated in comparison with the built-in whitelist, and details are not described again.

S604: The electronic device stores the updated whitelist.

For example, the electronic device may store whitelist content of the updated whitelist in the memory.

Optionally, the electronic device may also store the updated whitelist in the xml format in the memory.

S605: The electronic device ends a whitelist storage procedure.

For example, the electronic device determines whether the whitelist exists in the memory.

If the whitelist exists in the memory, the electronic device may clear the information obtained in steps S601-S603 and end the whitelist storage procedure.

If the whitelist does not exist in the memory, after storing, in the memory, the whitelist content read in step S602 or the whitelist in the xml format, the electronic device clears the information obtained in steps S601-S603, and ends the whitelist storage procedure.

The server may periodically update the cloud-pushed whitelist stored in the server, and notify the electronic device managed by the server. Examples are shown in S700-S701 in FIG. 12A to FIG. 12C.

S700: The server periodically updates the cloud-pushed whitelist stored in the server.

S701: After the server completes updating of the cloud-pushed whitelist, the server may send a push success broadcast to the electronic device managed by the server. The push success broadcast may be used to prompt the electronic device that the cloud-pushed whitelist stored in the server is updated. In this way, when the electronic device receives the push success broadcast, the electronic device may successively perform steps S601-S605, or the electronic device successively performs steps S601, S602, S603, and S605.

In the whitelist storage manner in this embodiment, the electronic device may obtain an updated whitelist in a timely manner, so that the electronic device drags, based on the updated whitelist, pictures of more third-party applications that do not support dragging, thereby expanding an application scope of the picture dragging method provided in this embodiment of this application, and further improving user experience of using the electronic device.

It can be learned from the foregoing shown embodiments that the picture dragging method provided in this embodiment of this application is a system-level dragging method. Regardless of whether the application itself supports dragging, and regardless of whether the format of the picture control of the application is the inherited ImageView format, provided that the page name of the target page and the control name of the picture control are in the whitelist, or the application package name and the control name are in the whitelist, according to the picture dragging method provided in this embodiment of this application, a picture of the picture control can be dragged, so that picture content of the picture control is conveniently and quickly transferred between an application to which the picture control belongs and a sub-service, thereby improving user experience of using the electronic device.

An embodiment of this application further provides a picture dragging method. The method includes S901-S906:
S901: An electronic device displays a first interface of a first application, where the first interface includes a first view, and the first view includes a first picture.
S902: The electronic device receives a first touch operation performed on the first picture.
S903: When the first touch operation remains touched and held, and when the electronic device determines that a format of a drawable object of the first picture is not a first format, the electronic device obtains the drawable object of the first picture, redraws the drawable object of the first picture to obtain a second picture, and creates a drag box. Content of the second picture includes content of the first picture. The first format is, for example, a bitmap format.
S904: The second picture is displayed in the drag box.
S905: When the first touch operation moves, the drag box moves along with the first touch operation.
S906: In response to that the first touch operation moves to a first region of a display screen of the electronic device, the electronic device starts a second application, and displays a window of the second application in a second region of the display screen. The window of the second application includes one or more icons, and each of the icons corresponds to one service capable of receiving the picture displayed in the drag box.

In this embodiment, the electronic device may be an electronic device in the embodiment of FIG. 4A to FIG. 4C. The first application may be a first application in the embodiment of FIG. 4A to FIG. 4C. The first interface may be a display interface of a target page in the embodiment of FIG. 4A to FIG. 4C. The first view may be a target control in the embodiment of FIG. 4A to FIG. 4C. The first picture may be a picture of the target control in the embodiment of FIG. 4A to FIG. 4C. The drag box may be a drag box in the embodiment of FIG. 4A to FIG. 4C, for example, a drag box 308 in the embodiment of FIG. 3A to FIG. 3H. The drawable object of the first picture may be a drawable object (drawable) in a view entity of the target control in the embodiment of FIG. 8. The second picture may be a bitmap obtained in S805 in the embodiment of FIG. 8. The first region may be a hot zone in the embodiment of FIG. 4A to FIG. 4C, for example, may be an invisible hot zone 31 in the embodiment of FIG. 3A to FIG. 3H. The second application may be a second application in the embodiment of FIG. 4A to FIG. 4C. The second region is, for example, a region in which a sidebar 32 is located in the embodiment of FIG. 3A to FIG. 3H. One or more icons included in the window of the second application are, for example, icons included in the sidebar 32 in the embodiment of FIG. 3A to FIG. 3H. Services corresponding to the icons included in the window of the second application are, for example, sub-services in the embodiment of FIG. 3A to FIG. 3H. Optionally, the first region may include the second region, and an area of the first region may be larger than or equal to an area of the second region. The first region may alternatively be the second region. It may be understood that the touch operation remaining touched and held may be understood as that the touch operation does not move or lift.

In this embodiment, specific implementation principles and technical effects for the scenario in which when the electronic device determines that a format of a drawable object of the first picture is not a first format, the electronic device obtains the drawable object of the first picture, and redraws the drawable object of the first picture to obtain a second picture are similar to the specific implementation principles and the technical effects of S803, S805, and S807 in the embodiment of FIG. 8. For specific implementation principles of S901-S906, refer to specific implementation principles of steps S100-S220 in the embodiment of FIG. 4A to FIG. 4C. Details are not described herein again. In this embodiment, when the first touch operation remains touched and held, if the electronic device determines that the format of the drawable object of the first picture is not the first format, the electronic device obtains the drawable object of the first picture, redraws the drawable object of the first picture to obtain a second picture, and creates a drag box, where the content of the second picture is the same as the content of the first picture. The electronic device may display the drag box, and the drag box displays the second picture, so as to prompt the user that the content of the first picture has been copied and stored, so that the user can perform dragging, thereby reducing a quantity of operations of copying the content of the first picture. The drag box may move along with the first touch operation. The electronic device further starts the second application during movement of the first touch operation. The window of the second application includes one or more icons so that the user can easily select a target service, where the target service is a service corresponding to a target icon. This may improve user experience of using the electronic device.

Optionally, before the electronic device obtains the drawable object of the first picture, the method further includes:
The electronic device determines whether a format of the first view is a second format. A specific implementation principle of this step is similar to specific implementation principles of S801-S802 in the embodiment of FIG. 8, and details are not described herein again. The second format is, for example, an inherited ImageView format. The second format represents that an implementation of a native picture view of Android android is inherited.

When the electronic device determines that the format of the first view is the second format, the electronic device determines whether the format of the drawable object of the first picture is the first format. A specific implementation principle of this step is similar to a specific implementation principle of S803 in the embodiment of FIG. 8, and details are not described herein again.

Alternatively, when the electronic device determines that the format of the first view is not the second format, the electronic device obtains a display region resource of the first view, redraws the display region resource of the first view to obtain a third picture, and creates the drag box. The third picture may be displayed in the drag box. The display region resource of the first view includes the drawable object of the first picture and a blank region, and content of the third picture includes the content of the first picture. Specific implementation principles for the scenario in which when the electronic device determines that the format of the first view is not the second format, the electronic device obtains a display region resource of the first view, and redraws the display region resource of the first view to obtain a third picture are similar to specific implementation principles of S806 and S807 in the embodiment of FIG. 8. Details are not described herein again.

It may be understood that the first view in this embodiment may alternatively be a target control in the embodiment of FIG. 12A to FIG. 12C, and the first picture in this embodiment may alternatively be a picture of the target control in the embodiment of FIG. 12A to FIG. 12C. The first view in this embodiment may alternatively be a target control 130 in the embodiment of FIG. 13, and the first picture in this embodiment may alternatively be picture content 1302 in the embodiment of FIG. 13. The display region resource of the first view may alternatively be a display region resource of the target control in the view entity of the target control in the embodiment of FIG. 8. If the first view is the target control 130 in the embodiment of FIG. 13, the display region resource of the first view includes picture content 1302 and a blank region 1301 in the embodiment of FIG. 13. If the first view is the target control in the embodiment of FIG. 12A to FIG. 12C, and the target control in the embodiment of FIG. 12A to FIG. 12C is, for example, the control 306 in the embodiment of FIG. 3A to FIG. 3H, the display region resource of the first view includes picture content of the control 306. The third picture may be a bitmap corresponding to the picture of the target control in the embodiment of FIG. 12A to FIG. 12C, for example, a bitmap obtained in S806 in the embodiment of FIG. 8. A specific implementation principle and a technical effect for creating the drag box by the electronic device by using the third picture are similar to a specific implementation principle and a technical effect of S217 in the embodiment of FIG. 12A to FIG. 12C, and details are not described herein again.

For specific implementation principles of S901-S906, further refer to specific implementation principles of steps S100-S220 in the embodiment of FIG. 12A to FIG. 12C. Details are not described herein again.

In this way, when the format of the first view is not the second format, the electronic device obtains the display region resource of the first view. The third picture obtained by the electronic device by redrawing the display region resource of the first view may include not only the content of the first picture, but also a blank region, so as to copy and store the content of the first picture when the user performs a touch and hold operation, thereby reducing a quantity of operations of copying the content of the first picture. The created drag box may further display the third picture. Displaying the drag box may prompt the user that the content of the first picture has been copied and stored, so that the user can perform dragging.

Optionally, the picture dragging method provided in this embodiment further includes:
When the electronic device determines that the format of the drawable object of the first picture is the first format, the electronic device obtains the first picture and creates a drag box. The first picture may be displayed in the created drag box.

A specific implementation principle for obtaining the first picture by the electronic device when the electronic device determines that the format of the drawable object of the first picture is the first format is similar to specific implementation principles of S803, S804, and S807 in the embodiment of FIG. 8, and details are not described herein again. For a specific implementation principle for creating the drag box by the electronic device by using the first picture, refer to a specific implementation principle of S217 in the embodiment of FIG. 4A to FIG. 4C. Details are not described herein again.

In this way, when the format of the first view is the second format, and the format of the drawable object of the first picture is the first format, the electronic device obtains the drawable object of the first picture, that is, obtains a bitmap corresponding to the first picture, and creates the drag box, so that the drag box displays the first picture. When the user performs a touch and hold operation, the content of the first picture can be copied and stored without a need to redraw an image resource of the first view, thereby reducing a quantity of operations of copying the content of the first picture, and further creating a drag box more quickly in comparison with a need to redraw the drawable object of the first picture, and prompting the user earlier that the content of the first picture has been copied and stored, so that the user can perform dragging.

Optionally, the picture dragging method provided in this embodiment further includes: When the electronic device redraws the drawable object of the first picture to obtain the second picture, the electronic device starts a first timer, where timing duration of the first timer is first duration.

When the first timer reaches the first duration, the electronic device deletes the stored second picture.

It may be understood that if the electronic device stores the first picture, when the first timer reaches the first duration, the electronic device deletes the stored first picture. If the electronic device stores the third picture, when the first timer reaches the first duration, the electronic device deletes the stored third picture. For example, when the electronic device obtains the first picture, the electronic device starts the first timer. When the first timer reaches the first duration, the electronic device deletes the stored first picture. When the electronic device redraws the display region resource of the first view to obtain the third picture, the electronic device starts the first timer. When the first timer reaches the first duration, the electronic device deletes the stored third picture.

This may help provide sufficient storage space for next storage of the picture content, and may further reduce an occurrence probability that the picture stored in the electronic device is maliciously spread.

Optionally, the picture dragging method provided in this embodiment further includes S907-S908:
S907: When the first touch operation moves to a position of a target icon in the one or more icons, in response to lifting of the first touch operation, the second application transfers, to a service corresponding to the target icon, a universal resource identifier Uri of the picture displayed in the drag box.

S908: The service corresponding to the target icon obtains, based on the Uri, the picture displayed in the drag box.

It may be understood that if the drag box displays the first picture, a service corresponding to the target icon obtains the first picture based on the Uri. If the drag box displays the second picture, the service corresponding to the target icon obtains the second picture based on the Uri. If the drag box displays the third picture, the service corresponding to the target icon obtains the third picture based on the Uri.

For example, specific implementation principles and technical effects of S907-S908 are similar to a specific implementation principle and a technical effect of S220 in the embodiment of FIG. 4A to FIG. 4C. The specific implementation principles and the technical effects of S907-S908 are further similar to specific implementation principles and technical effect of the embodiment of FIG. 10.

In this way, the first touch operation moves to the position of the target icon in the one or more icons, and in response to lifting of the first touch operation, the second application transfers the Uri to the service corresponding to the target icon. The service corresponding to the target icon obtains the content of the first picture based on the Uri, so as to conveniently and quickly transfer the content of the first picture between the first application and the target service, thereby reducing an operation step of enabling a target service by the user, and improving user experience.

Optionally, the picture dragging method provided in this embodiment further includes S909:
S909: When the first touch operation moves to a third region of the display screen, and the drag box moves to the third region with the first touch operation, in response to lifting of the first touch operation, the electronic device controls the drag box to roll back to a position at which the drag starts, and the electronic device deletes the stored picture displayed in the drag box. The third region does not include the second region.

For example, the third region may be a display window of a target page in the embodiment of FIG. 4A to FIG. 4C, for example, a page window 30 in the embodiment of FIG. 3A to FIG. 3H. Specific implementation principles and technical effects for the scenario in which in response to lifting of the first touch operation, the electronic device controls the drag box to roll back to a position at which the drag starts, and the electronic device deletes the stored picture displayed in the drag box are similar to specific implementation principles and technical effects of the embodiment of FIG. 11. Details are not described herein again.

In this way, in a scenario in which the first touch operation lifts before moving to the second region, in response to lifting of the first touch operation, the electronic device controls the drag box to roll back to a position at which the drag starts, thereby implementing view experience of cancelling the drag, which may improve user experience. The electronic device deletes the stored picture included in the drag box, helping provide sufficient storage space for next storage of the picture content, and further reducing an occurrence probability that the picture stored in the electronic device is maliciously spread.

Optionally, the second region is a sidebar on a right side of a display screen. The sidebar is, for example, a sidebar 32 in the embodiment of FIG. 3A to FIG. 3H. In this way, display space for easy viewing and searching by the user is left for the window of the first application, and it is also convenient for the user to drag the drag box and select a target icon, thereby improving user experience.

Optionally, before the electronic device obtains the drawable object of the first picture, the picture dragging method provided in this embodiment further includes:
In response to the first touch operation, the electronic device starts a second timer and a third timer, where timing duration of the second timer is second duration, timing duration of the third timer is third duration, and the third duration is a sum of the second duration and delay duration.

When the first touch operation remains touched and held, in response to that the second timer reaches the second duration, the electronic device displays a first pop-up window around the first picture, where the first pop-up window includes one or more controls.

When the first touch operation remains touched and held, in response to that the third timer reaches the third duration and the electronic device finds, through query, that the electronic device displays the first pop-up window in response to the first touch operation, the electronic device starts a fourth timer, where timing duration of the fourth timer is fourth duration, and the fourth duration is greater than or equal to the delay duration.

That the electronic device obtains the drawable object of the first picture, redraws the drawable object of the first picture to obtain a second picture, and creates a drag box includes: In response to that the fourth timer reaches the fourth duration, the electronic device obtains the drawable object of the first picture, redraws the drawable object of the first picture to obtain the second picture, and creates the drag box and displays the drag box.

For example, the second timer may be a second timer in the embodiment of FIG. 4A to FIG. 4C, the third timer may be a third timer in the embodiment of FIG. 4A to FIG. 4C, the fourth timer may be a fourth timer in the embodiment of FIG. 4A to FIG. 4C, the second duration may be second timing duration or system touch and hold duration in the embodiment of FIG. 4A to FIG. 4C, the third duration may be third timing duration in the embodiment of FIG. 4A to FIG. 4C, the delay duration may be first extension duration in the embodiment of FIG. 4A to FIG. 4C, the first pop-up window may be a new window in the embodiment of FIG. 4A to FIG. 4C, the first pop-up window may alternatively be a new window 71 in the embodiment of FIG. 7, and the control included in the first pop-up window may be a control in the new window 71 in the embodiment of FIG. 7.

In this embodiment, the third duration may be used to preliminarily determine whether a user intention corresponding to the first touch operation is a drag intention. When the first touch operation remains touched and held, if the third timer reaches the third duration, and the electronic device displays a pop-up window, the user intention corresponding to the first touch operation may be an intention of performing an operation on the pop-up window, or may be a drag intention. In this case, it may be further accurately determined, by using the fourth timer and the fourth duration, whether the user intention corresponding to the first touch operation is the drag intention. If the first touch operation does not move or lift when the fourth timer reaches the fourth duration, it may be determined that the user intention corresponding to the first touch operation is the drag intention. In this case, the electronic device may display a drag box, so as to prompt, when the first touch operation does not lift or move, the user that the content of the first picture has been copied and may be dragged, thereby reducing a quantity of operations of copying the content of the first picture, and further improving user experience of using the electronic device. The third duration is a sum of the second duration and the delay duration, and may further implement compatibility between display logic of the drag box and display logic of the pop-up window.

Optionally, the picture dragging method provided in this embodiment of this application further includes S910-S913:
S910: The electronic device displays a second interface of a third application, where the second interface includes a second view, and the second view includes a fourth picture.
S911: In response to a second touch operation performed on the fourth picture, the electronic device starts the second timer and the third timer.
S912: When the second touch operation remains touched and held, in response to that the second timer reaches the second duration, the electronic device displays a second pop-up window around the fourth picture, where the second pop-up window includes one or more controls.
S913: When the third timer does not reach the third duration, in response to movement or lifting of the second touch operation, the electronic device disables the third timer.

For example, the third application may be a first application in the embodiment of FIG. 4A to FIG. 4C, the second interface may be a display interface of a target page in the embodiment of FIG. 4A to FIG. 4C, the second view may be a target control in the embodiment of FIG. 4A to FIG. 4C, the fourth picture may be a picture of the target control in the embodiment of FIG. 4A to FIG. 4C, the second pop-up window may be a new window in the embodiment of FIG. 4A to FIG. 4C, the second pop-up window may alternatively be a new window 71 in the embodiment of FIG. 7, and the control included in the second pop-up window may be a control in the new window 71 in the embodiment of FIG. 7. For specific implementation principles and technical effects of S910-S913, refer to specific implementation principles and technical effects of S100-S208 in the embodiment of FIG. 4A to FIG. 4C. For specific implementation principles and technical effects for the scenario in which when the third timer does not reach the third duration, in response to movement of the second touch operation, the electronic device disables the third timer in S913, refer to specific implementation principles and technical effects of the embodiment of FIG. 5. For specific implementation principles and technical effects for the scenario in which when the third timer does not reach the third duration, in response to lifting of the second touch operation, the electronic device disables the third timer in S913, refer to specific implementation principles and technical effects of the embodiment of FIG. 6.

In this way, the third timer does not reach the third duration, and the second touch operation moves or the second touch operation lifts, which may represent that the user intention corresponding to the second touch operation is not a drag intention. When it is determined that the user intention is not a drag intention, the electronic device disables the third timer, so as to terminate a subsequent drag procedure, thereby reducing power consumption of invalid dragging.

Optionally, the picture dragging method provided in this embodiment of this application further includes S914-S918:
S914: The electronic device displays a third interface of a fourth application, where the third interface includes a third view, and the third view includes a fifth picture.
S915: In response to a third touch operation performed on the fifth picture, the electronic device starts the second timer and the third timer.
S916: When the third touch operation remains touched and held, in response to that the second timer reaches the second duration, the electronic device displays a third pop-up window around the fifth picture, where the third pop-up window includes one or more controls.
S917: When the third touch operation remains touched and held, in response to that the third timer reaches the third duration and the electronic device finds, through query, that the electronic device displays the third pop-up window in response to the third touch operation, the electronic device starts a fourth timer, where timing duration of the fourth timer is fourth duration, and the fourth duration is greater than or equal to the delay duration.
S918: When the fourth timer does not reach the fourth duration, in response to movement or lifting of the third touch operation, the electronic device disables the fourth timer.

For example, the fourth application may be a first application in the embodiment of FIG. 4A to FIG. 4C, the third interface may be a display interface of a target page in the embodiment of FIG. 4A to FIG. 4C, the third view may be a target control in the embodiment of FIG. 4A to FIG. 4C, the fifth picture may be a picture of the target control in the embodiment of FIG. 4A to FIG. 4C, the third pop-up window may be a new window in the embodiment of FIG. 4A to FIG. 4C, the third pop-up window may alternatively be a new window 71 in the embodiment of FIG. 7, and the control included in the third pop-up window may be a control in the new window 71 in the embodiment of FIG. 7. For specific implementation principles and technical effects of S914-S918, refer to specific implementation principles and technical effects of S100-5212 in the embodiment of FIG. 4A to FIG. 4C. For specific implementation principles and technical effects for the scenario in which when the fourth timer does not reach the fourth duration, in response to movement of the third touch operation, the electronic device disables the fourth timer in S918, refer to specific implementation principles and technical effects of the embodiment of FIG. 5. For specific implementation principles and technical effects for the scenario in which when the fourth timer does not reach the fourth duration, in response to lifting of the third touch operation, the electronic device disables the fourth timer in S918, refer to specific implementation principles and technical effects of the embodiment of FIG. 6.

In this way, the fourth timer does not reach the fourth duration, and the third touch operation moves or the third touch operation lifts, which may represent that the user intention corresponding to the third touch operation is not a drag intention. When it is determined that the user intention is not a drag intention, the electronic device disables the fourth timer, so as to terminate a subsequent drag procedure, thereby reducing power consumption of invalid dragging.

The picture dragging method provided in this embodiment of this application may be applied to an electronic device with a communication function. The electronic device includes the terminal device. For a specific device form and the like of the terminal device, refer to the foregoing related description. Details are not described herein again.

An embodiment of this application provides an electronic device, and the electronic device includes a processor and a storage. The storage stores computer-executable instructions. The processor executes the computer-executable instructions stored in the storage, to enable the electronic device to perform the foregoing method.

An embodiment of this application provides a chip. The chip includes a processor, and the processor is configured to invoke a computer program in a storage to execute the technical solutions in the foregoing embodiments. The implementation is similar to the foregoing related embodiments in terms of implementation principles and technical effects. Details are not described herein again.

An embodiment of this application further provides a computer-readable storage medium. The computer-readable storage medium stores a computer program. The foregoing method is implemented when the computer program is executed by a processor. All or some of the methods described in the foregoing embodiments may be implemented by using software, hardware, firmware, or any combination thereof. If implemented in software, functions may be stored in a computer-readable medium or transmitted on a computer-readable medium as one or more instructions or code. The computer-readable medium may include a computer storage medium and a communication medium, and may further include any medium that enables a computer program to be transmitted from a place to another place. The storage medium may be any target medium accessible by a computer.

In a possible implementation, the computer-readable medium may include a RAM, a ROM, a compact disc read-only memory (compact disc read-only memory, CD-ROM) or another optical disc storage, a magnetic disk storage or another magnetic storage device, or any other medium that is to carry or store required program code in a form of an instruction or a data structure, and may be accessed by a computer. In addition, any connection is appropriately referred to as a computer-readable medium. For example, if software is transmitted from a website, a server, or another remote source by using a coaxial cable, an optical fiber cable, a twisted pair, a digital subscriber line (Digital Subscriber Line, DSL), or wireless technologies (such as infrared, radio, and microwave), the coaxial cable, the optical fiber cable, the twisted pair, the DSL, or the wireless technologies such as infrared, radio, and microwave are included in the definition of the medium. As used herein, a magnetic disk and an optical disc include a compact disc, a laser disc, an optical disc, a digital versatile disc (Digital Versatile Disc, DVD), a floppy disk, and a Blu-ray disc, and the magnetic disk usually reproduces data magnetically, while the optical disc reproduces data optically by using a laser. A combination of the foregoing should also be included in the scope of the computer-readable medium.

An embodiment of this application provides a computer program product. The computer program product includes a computer program, and when the computer program is run, a computer is enabled to perform the foregoing method.

The embodiments of this application are described with reference to the flowcharts and/or block diagrams of the method, the device (system), and the computer program product according to the embodiments of this application. It should be understood that computer program instructions may be used to implement each procedure and/or each block in the flowcharts and/or the block diagrams and a combination of procedures and/or blocks in the flowcharts and/or the block diagrams. These computer program instructions may be provided to a general-purpose computer, a special-purpose computer, an embedded processor, or a processing unit of another programmable device to generate a machine, so that the instructions executed by the computer or the processing unit of the another programmable data processing device generate an apparatus for implementing a specific function in one or more flows in the flowcharts and/or in one or more blocks in the block diagrams.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions in the present invention shall fall within the protection scope of the present invention.

## Claims

1. A picture drawing method, wherein the method comprises:
displaying, by an electronic device, a first interface of a first application, wherein the first interface comprises a first view, and the first view comprises a first picture;
receiving, by the electronic device, a first touch operation performed on the first picture;
when the first touch operation remains touched and held, and when the electronic device determines that a format of a drawable object of the first picture is not a first format, obtaining, by the electronic device, the drawable object of the first picture, redrawing the drawable object of the first picture to obtain a second picture, and creating a drag box, wherein content of the second picture comprises content of the first picture;
displaying the second picture in the drag box, wherein
when the first touch operation moves, the drag box moves along with the first touch operation; and
in response to that the first touch operation moves to a first region of a display screen of the electronic device, starting, by the electronic device, a second application, and displaying a window of the second application in a second region of the display screen, wherein the window of the second application comprises one or more icons, and each of the icons corresponds to one service capable of receiving the picture displayed in the drag box.

2. The method according to claim 1, wherein before the obtaining, by the electronic device, the drawable object of the first picture, the method further comprises:
determining, by the electronic device, whether a format of the first view is a second format; and
when the electronic device determines that the format of the first view is the second format, determining, by the electronic device, whether the format of the drawable object of the first picture is the first format; or
when the electronic device determines that the format of the first view is not the second format, obtaining, by the electronic device, a display region resource of the first view, redrawing the display region resource of the first view to obtain a third picture, and creating the drag box, wherein the display region resource of the first view comprises the drawable object of the first picture and a blank region, and content of the third picture comprises content of the first picture.

3. The method according to claim 2, wherein the method further comprises:
when the electronic device determines that the format of the drawable object of the first picture is the first format, obtaining, by the electronic device, the first picture, and creating the drag box.

4. The method according to claim 2 or 3, wherein the first format is a bitmap bitmap format, and the second format represents that an implementation of a native picture view of Android android is inherited.

5. The method according to any one of claims 1-4, further comprising: starting, by the electronic device, a first timer when the electronic device redraws the drawable object of the first picture to obtain the second picture, wherein timing duration of the first timer is first duration; and
when the first timer reaches the first duration, deleting, by the electronic device, the stored second picture.

6. The method according to any one of claims 1-5, further comprising:
when the first touch operation moves to a position of a target icon in the one or more icons, in response to lifting of the first touch operation, transferring, by the second application to a service corresponding to the target icon, a universal resource identifier Uri of the picture displayed in the drag box; and
obtaining, by the service corresponding to the target icon based on the Uri, the picture displayed in the drag box.

7. The method according to any one of claims 1-5, further comprising:
when the first touch operation moves to a third region of the display screen, and the drag box moves to the third region with the first touch operation, in response to lifting of the first touch operation, controlling, by the electronic device, the drag box to roll back to a position at which the drag starts, and deleting, by the electronic device, the stored picture displayed in the drag box, wherein the third region does not comprise the second region.

8. The method according to any one of claims 1-7, wherein the second region is a sidebar on a right side of the display screen.

9. The method according to any one of claims 1-8, before the obtaining, by the electronic device, the drawable object of the first picture, further comprising:
in response to the first touch operation, starting, by the electronic device, a second timer and a third timer, wherein timing duration of the second timer is second duration, timing duration of the third timer is third duration, and the third duration is a sum of the second duration and delay duration;
when the first touch operation remains touched and held, in response to that the second timer reaches the second duration, displaying, by the electronic device, a first pop-up window around the first picture, wherein the first pop-up window comprises one or more controls;
when the first touch operation remains touched and held, in response to that the third timer reaches the third duration and the electronic device finds, through query, that the electronic device displays the first pop-up window in response to the first touch operation, starting, by the electronic device, a fourth timer, wherein timing duration of the fourth timer is fourth duration, and the fourth duration is greater than or equal to the delay duration; and
the obtaining, by the electronic device, the drawable object of the first picture, redrawing the drawable object of the first picture to obtain a second picture, and creating a drag box comprises:
in response to that the fourth timer reaches the fourth duration, obtaining, by the electronic device, the drawable object of the first picture, redrawing the drawable object of the first picture to obtain the second picture, and creating the drag box and displaying the drag box.

10. The method according to claim 9, further comprising:
displaying, by the electronic device, a second interface of a third application, wherein the second interface comprises a second view, and the second view comprises a fourth picture;
in response to a second touch operation performed on the fourth picture, starting, by the electronic device, the second timer and the third timer;
when the second touch operation remains touched and held, in response to that the second timer reaches the second duration, displaying, by the electronic device, a second pop-up window around the fourth picture, wherein the second pop-up window comprises one or more controls; and
when the third timer does not reach the third duration, in response to movement or lifting of the second touch operation, disabling, by the electronic device, the third timer.

11. The method according to claim 9 or 10, further comprising:
displaying, by the electronic device, a third interface of a fourth application, wherein the third interface comprises a third view, and the third view comprises a fifth picture;
in response to a third touch operation performed on the fifth picture, starting, by the electronic device, the second timer and the third timer;
when the third touch operation remains touched and held, in response to that the second timer reaches the second duration, displaying, by the electronic device, a third pop-up window around the fifth picture, wherein the third pop-up window comprises one or more controls;
when the third touch operation remains touched and held, in response to that the third timer reaches the third duration and the electronic device finds, through query, that the electronic device displays the third pop-up window in response to the third touch operation, starting, by the electronic device, a fourth timer, wherein timing duration of the fourth timer is fourth duration, and the fourth duration is greater than or equal to the delay duration; and
when the fourth timer does not reach the fourth duration, in response to movement or lifting of the third touch operation, disabling, by the electronic device, the fourth timer.

12. An electronic device, comprising a processor and a storage, wherein
the storage stores computer-executable instructions; and
the processor executes the computer-executable instructions stored in the storage, to enable the electronic device to perform the method according to any one of claims 1-11.

13. A computer-readable storage medium, wherein the computer-readable storage medium stores a computer program, and when the computer program is executed by a processor, the method according to any one of claims 1-11 is implemented.
